(19) Europäisches Patentamt
European Patent Office
Office européen des brevets

(11) **EP 2 557 791 A1**

(12) **EUROPEAN PATENT APPLICATION**
published in accordance with Art. 153(4) EPC

(43) Date of publication:
**13.02.2013 Bulletin 2013/07**

(51) Int Cl.:
*H04N 7/32* (2006.01)

(21) Application number: **11765201.6**

(22) Date of filing: **23.03.2011**

(86) International application number:
**PCT/JP2011/001690**

(87) International publication number:
**WO 2011/125299 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2010 JP 2010217755**
**28.09.2010 JP 2010217754**
**07.04.2010 JP 2010088529**
**07.04.2010 JP 2010088528**

(71) Applicant: **JVC Kenwood Corporation**
**Yokohama-shi, Kanagawa 221-0022 (JP)**

(72) Inventor: **FUKUSHIMA, Shigeru**
**Yokohama-shi**
**Kanagawa 221-0022 (JP)**

(74) Representative: **Emde, Eric**
**Wagner & Geyer**
**Gewürzmühlstrasse 5**
**80538 München (DE)**

(54) **MOVING IMAGE ENCODING DEVICE, MOVING IMAGE ENCODING METHOD, MOVING IMAGE ENCODING PROGRAM, MOVING IMAGE DECODING DEVICE, MOVING IMAGE DECODING METHOD, AND MOVING IMAGE DECODING PROGRAM**

(57) A provisional region dividing unit 101 divides a block to be encoded into a plurality of provisional regions on a predetermined provisional boundary. A motion vector detecting unit 102 detects a motion vector with respect to each provisional region. An actual region dividing·motion compensating unit 103 generates a synthesized prediction block by generating a plurality of prediction blocks corresponding to the block to be encoded from a reference image by using the motion vector of each provisional region, deciding an actual boundary based on activities of the plurality of prediction blocks, and joining regions acquired by dividing the each prediction block on the actual boundary among the respective prediction blocks. A variable length encoding unit 105 encodes a prediction difference block acquired by subtracting a synthesized prediction block from the block to be encoded, and the motion vector of each provisional region.

FIG.1

**Description**

TECHNICAL FIELD

The present invention relates to techniques for encoding and decoding a moving picture, and more particularly, to techniques for encoding and decoding a moving picture using motion compensating prediction.

BACKGROUND ART

In compression encoding of a moving picture which is representative by MPEG (Moving Picture Experts Group), motion compensating prediction of compressing a code amount by using the relationship between frames is generally used. In the motion compensating prediction used in the MPEG, and the like, a prediction image is generated by using a motion vector indicating the relative positional relationship between an image to be encoded and a reference image from the reference image which has been already decoded for each block having a predetermined size. Thereafter, an encoding side calculates a prediction error which is a difference between an actual image to be encoded and the prediction image, generated by the motion compensating prediction, and transmits only the prediction error to a decoding side. As a result, a code amount to be transmitted can be significantly reduced as compared with a case without the motion compensating prediction.

In general, encoding and decoding are performed by the unit of a macro block (a pixel group having a predetermined block size, for example, 16 x 16). The motion compensating prediction is also generally performed by the unit of the macro block, but in this case, it is difficult to catch a motion of an object which is smaller than the macro block, and as a result, encoding efficiency deteriorates. Herein, as a method for making the motion compensating prediction perform a function with higher efficiency, multi-block pattern motion compensating prediction can be used.

In the multi-block pattern motion compensating prediction, the motion compensating prediction can be performed by dividing the macro block into sub-blocks and using different motion vectors in the respective sub-blocks. A division pattern of the used motion compensating prediction block is, in advance, defined with the same rule at the encoding side and the decoding side. The encoding side selects the block pattern of the motion compensating prediction from the defined block patterns and transmits selection information of the block pattern to the decoding side. At the decoding side, the motion compensating prediction is performed based on the received selection information of the block pattern. In the multi-block pattern motion compensating prediction, when the encoding side selects a block pattern which is optimal to the motion compensating prediction, a prediction error after the motion compensating prediction is reduced, thereby improving encoding efficiency.

As a detailed example of the block pattern, in MPEG-4 AVC (Advanced Video Coding) internationally standardized by a junction video team (JVT) of ISO/IEC and ITU-T, the macro block (16 x 16 block) is divided into block patterns of $16 \times 8$, $8 \times 16$, $8 \times 8$, $8 \times 4$, $4 \times 8$, and $4 \times 4$ to perform the motion compensating prediction. The encoding side selects the block pattern to encode the selection information of the block pattern within a bitstream. The decoding side divides the macro block into regions according to the block pattern encoded within the bitstream and performs the motion compensating prediction for each divided region.

In addition, Patent Literature 1 and Patent Literature 2 discloses a technique of performing the motion compensating prediction in a more flexible shape by defining various motion compensating prediction shape patterns.

Patent Literature 1: Japanese Patent No. 4025570
Patent Literature 2: Japanese Patent Application National Republication No. WO2003-026315

DISCLOSURE OF THE INVENTION

PROBLEMS TO BE SOLVED BY THE INVENTION

However, in the method disclosed in Patent Literature 1 or 2, when the defined motion compensating prediction shape patterns are increased, the number of shape patterns increases, and as a result, a code amount consumed for selection information of transmitted shape patterns is increased. That is, since the decrease in prediction error by the increase in shape patterns and the increase in code amount associated with selection of the shape pattern have a trade-off relationship, it is difficult to improve overall encoding efficiency just by increasing the number of shape patterns.

In encoding/decoding the moving picture in the related art, since only the motion compensation prediction of a predetermined shape pattern can be performed, the motion compensating prediction cannot be performed in an optimal shape and the encoding efficiency cannot be improved. When shape patterns of the defined motion compensating prediction are increased, a code amount of additional information associated with the selection of the shape patterns of the motion compensating prediction is increased, and as a result, the overall encoding efficiency may not be improved.

The present invention has been made in view of the above-described circumstance, and is directed to provide a technique that enables the motion compensating prediction in various block patterns without increasing the code amount of the additional information associated with the block patterns of the motion compensating prediction to improve the encoding efficiency by reducing the prediction error.

MEANS TO SOLVE THE PROBLEMS

To solve the above-described problem, a moving picture encoding apparatus according to an aspect of the present invention includes: a provisional region dividing unit (101) configured to divide a block to be encoded into a plurality of provisional regions on a predetermined provisional boundary; a motion vector detecting unit (102) configured to detect a motion vector with respect to each provisional region; a motion compensating unit (103) configured to generate a synthesized prediction block by generating a plurality of prediction blocks corresponding to the block to be encoded from a reference image by using the motion vector of each provisional region, deciding an actual boundary based on activities of the plurality of prediction blocks, and joining regions acquired by dividing the each prediction block on the actual boundary among the respective prediction blocks; and an encoding unit (105) configured to encode a prediction difference block acquired by subtracting the synthesized prediction block from the block to be encoded and the motion vector of each provisional region.

Another aspect of the present invention provides a moving picture encoding method. This method includes: dividing a block to be encoded into a plurality of provisional regions on a predetermined provisional boundary; detecting a motion vector with respect to each provisional region; generating a synthesized prediction block by generating a plurality of prediction blocks corresponding to the block to be encoded from a reference image by using the motion vector of each provisional region, deciding an actual boundary based on activities of the plurality of prediction blocks, and joining regions acquired by dividing the each prediction block on the actual boundary among the respective prediction blocks; and encoding a prediction difference block acquired by subtracting the synthesized prediction block from the block to be encoded and the motion vector of each provisional region.

A moving picture decoding apparatus according to still another aspect of the present invention includes: a decoding unit (201) configured to decode a plurality of motion vectors for a block to be decoded, from an encoded stream; a motion compensating unit (203) configured to generate a synthesized prediction block by using a plurality of motion vectors, generating a plurality of prediction blocks corresponding to the block to be decoded from a reference image, deciding a boundary based on activities of the plurality of prediction blocks, and joining regions acquired by dividing the each prediction block on the boundary among the respective prediction blocks; and an addition unit (209) configured to generate a decoded image by adding the synthesized prediction block and the decoded prediction difference block from the block to be decoded.

Another aspect of the present invention provides a moving picture decoding method. This method includes: decoding a plurality of motion vectors for a block to be decoded, from an encoded stream; generating a synthesized prediction block by using a plurality of motion vectors, generating a plurality of prediction blocks corresponding to the block to be decoded from a reference image, deciding a boundary based on activities of the plurality of prediction blocks, and joining regions acquired by dividing the each prediction block on the boundary among the respective prediction blocks; and generating a decoded image by adding the synthesized prediction block and the decoded prediction difference block from the block to be decoded.

Predetermined combinations of the components and conversion of expressions of the present invention among a method, an apparatus, a system, a recording medium, a computer program, and the like are also valid as aspects of the present invention.

ADVANTAGES OF THE INVENTION

According to the present invention, the motion compensating prediction in various block patterns is possible without increasing the code amount of the additional information associated with the block pattern of the motion compensating prediction to improve the encoding efficiency by reducing the prediction error.

BRIEF DESCRIPTION OF THE DRAWINGS

FIG. 1 is a block diagram illustrating a configuration of a moving picture encoding apparatus according to a first embodiment;
FIG. 2 is a block diagram illustrating a configuration of a moving picture decoding apparatus according to the first embodiment;

FIG. 3 is a diagram describing a pattern in which a macro block is divided into two in a horizontal direction;

FIG. 4 is a diagram describing a pattern in which the macro block is divided into two in a vertical direction;

FIG. 5 is a diagram illustrating a motion vector detected for each provisional region of the macro block;

FIG. 6 is a diagram illustrating a motion compensating prediction image generated from the motion vector detected for each provisional region;

FIG. 7 is a diagram illustrating a synthesized motion compensating prediction images generated from the motion vectors of the respective provisional regions;

FIG. 8 is a diagram describing a method for generating a synthesized motion compensating prediction image by synthesizing motion compensating prediction images generated from motion vectors of respective provisional regions;

FIG. 9 is a flowchart describing a decision order of an actual boundary by an actual region division motion compensating unit of FIG. 1;

FIG. 10 is a diagram describing an activity associated with actual boundary decision for the motion compensating prediction image;

FIG. 11 is a diagram describing an example of calculating a first activity and a second activity when an actual boundary candidate is defined at a 2-pixel interval;

FIG. 12 is a flowchart describing an adjustment order of a motion vector by a moving picture encoding apparatus of a second embodiment;

FIG. 13 is a flowchart describing an adjustment order of a provisional boundary by a moving picture encoding apparatus of a third embodiment;

FIG. 14 is a diagram illustrating a first syntax pattern of a bitstream of a moving picture encoded by the moving picture encoding apparatuses of the first to third embodiments;

FIG. 15 is a diagram illustrating semantics of a macro block type mb_type when a first flag indicating whether a decoding side automatically decides a shape of motion compensating prediction by the unit of a slice is ON/OFF;

FIG. 16 is a diagram illustrating a second syntax pattern in which a second flag indicating whether the decoding side automatically decides the shape of the motion compensating prediction by the unit of a macro block is transmitted;

FIG. 17 is a diagram illustrating a third syntax pattern of switching an algorithm in which the decoding side automatically decides the shape of the motion compensating prediction at the slice level;

FIG. 18 is a diagram illustrating a fourth syntax pattern of not discriminating a division direction of the macro block on syntax;

FIG. 19 is a diagram illustrating macro block type semantics of the fourth syntax pattern;

FIG. 20 is a diagram illustrating a fifth syntax pattern of deciding regional division without interlocking the regional division with the macro block type;

FIG. 21 is a diagram describing a case in which the embodiment of the present invention is applied to bidirectional prediction;

FIG. 22 is a diagram illustrating a method of two-dimensionally dividing a macro block into regions;

FIG. 23 is a flowchart describing an order of performing motion compensation by dividing the macro block two-dimensionally;

FIG. 24 is a diagram illustrating a method of dividing the macro block into three regions; and

FIG. 25 is a flowchart describing an order of performing motion compensation by dividing the macro block in three.

BEST MODE FOR CARRYING OUT THE INVENTION

The present invention will be described hereinbelow on the basis of preferred embodiments with reference to the drawings.

(First Embodiment)

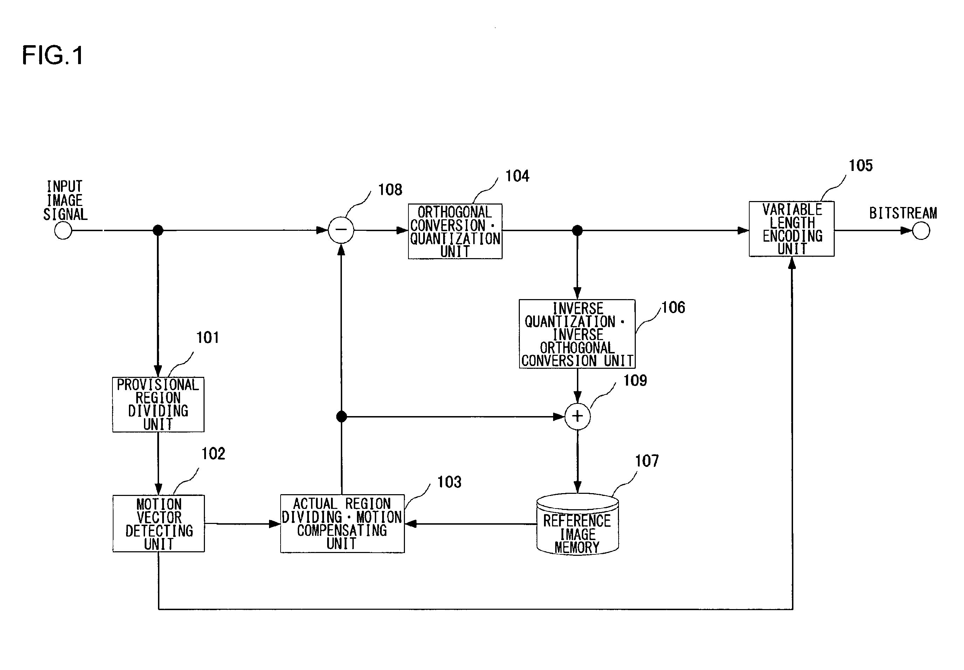

FIG. 1 is a block diagram illustrating a configuration of a moving picture encoding apparatus according to a first embodiment. The moving picture encoding apparatus according to the first embodiment includes a provisional region dividing unit 101, a motion vector detecting unit 102, an actual region dividing·motion compensating unit 103, an orthogonal conversion·quantization unit 104, a variable length encoding unit 105, an inverse quantization·inverse orthogonal conversion unit 106, a reference image memory 107, a subtraction unit 108, and an addition unit 109.

The provisional region dividing unit 101 divides a region on a predetermined boundary with respect to a pixel group to be encoded such as a $16 \times 16$ macro block. The region division is an independent method at the encoding side for detecting the motion vector, it does not matter which boundary the region division is performed on, but it is preferable that the region division is performed on a boundary where the efficiency of the motion compensating prediction is improved. Herein, as the most simple provisional region division, a case in which the macro block is divided into two only in a horizontal direction or a vertical direction will be described as an example.

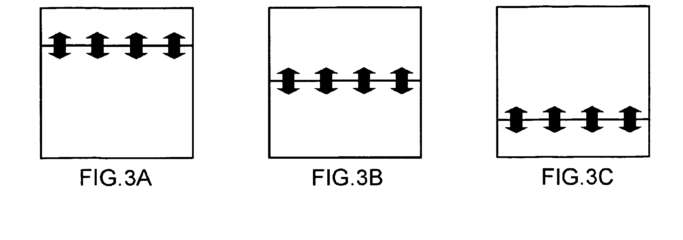

FIGS. 3A to 3C are diagrams describing a pattern in which the macro block is divided into two in the horizontal direction. FIG. 3A illustrates a pattern in which the macro block is divided into two regions of an upper region of $16 \times 4$ and a lower region of $16 \times 12$ on a horizontal boundary at a fourth pixel from the top, FIG. 3B illustrates a pattern in which the macro block is divided into two regions of an upper region of $16 \times 8$ and a lower region of $16 \times 8$ on a horizontal boundary at an eighth pixel from the top, and FIG. 3C illustrates a pattern in which the macro block is divided into two regions of an upper region of $16 \times 12$ and a lower region of $16 \times 4$ on a horizontal boundary at a twelfth pixel from the top.

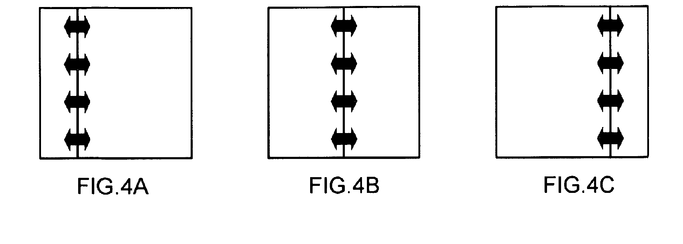

FIGS. 4A to 4C are diagrams describing a pattern in which the macro block is divided into two in a vertical direction. FIG. 4A illustrates a pattern in which the macro block is divided into two regions of a left region of $4 \times 16$ and a right region of $12 \times 16$ on a vertical boundary at a fourth pixel from the left, FIG. 4B illustrates a pattern in which the macro block is divided into two regions of a left region of $8 \times 16$ and a right region of $8 \times 16$ on a vertical boundary at an eighth pixel from the left, and FIG. 4C illustrates a pattern in which the macro block is divided into two regions of a left region of $12 \times 16$ and a right region of $4 \times 16$ on a vertical boundary at a twelfth pixel from the left.

A boundary of the macro block decided by the provisional region dividing unit 101 is called a provisional boundary and respective regions in the macro block, which are divided by the provisional boundary are called provisional regions.

Herein, three patterns in which the macro block is divided into two in the horizontal direction or vertical direction are described, but four or more division patterns may be formed by increasing candidate positions of the horizontal boundary or vertical boundary. The macro block may be divided on an oblique-direction boundary or a folded and bent boundary.

The provisional region dividing unit 101 calculates a horizontal activity regarding each horizontal boundary or a vertical activity regarding each vertical boundary with an actual image signal to be encoded. As described below, when the macro block is divided on the folded and bent boundary, the activity is calculated according to the folded and bent boundary.

An activity of an image signal is a value acquired by performing predetermined calculation with respect to a pixel. As an activity regarding the boundary for dividing the macro block into regions, for example, the sum of absolute differences (SAD) between two pixels across the boundary may be used. For example, when an X coordinate in a macro block is denoted by i, a Y coordinate is denoted by j, and a pixel value at a point (i, j) is denoted by $A_{i,j}$, a horizontal activity of a horizontal boundary j at a j-th pixel from the top is defined as follows.

$$\texttt{Horizontal activity} = \Sigma_{\texttt{i=0}}{}^{\texttt{15}}|\texttt{A}_{\texttt{i,j}}-\texttt{A}_{\texttt{i,j-1}}|$$

Herein, $\Sigma_i{=}0^{15}$ is a total sum dl when a suffix i moves from 0 to 15.

However, the activity may not be the sum of absolute differences (SAD). As expressed below, the activity may be the sum of squared differences (SSD).

$$\texttt{Horizontal activity} = \Sigma_{\texttt{i=0}}{}^{\texttt{15}}(\texttt{A}_{\texttt{i,j}}-\texttt{A}_{\texttt{i,j-1}})^{\texttt{2}}$$

Similarly, a vertical activity on a vertical boundary i at an i-th pixel from the left of the macro block is defined as follows.

$$\texttt{Vertical activity} = \Sigma_{\texttt{j=0}}{}^{\texttt{15}}|\texttt{A}_{\texttt{i,j}}-\texttt{A}_{\texttt{i-1,j}}|$$

The activity has a large value at an edge of an object, and the like. The provisional region dividing unit 101 provisionally divides the macro block into regions on a boundary where the activity has the largest value.

The motion vector detecting unit 102 detects the motion vector with respect to each of the provisional regions divided by the provisional region dividing unit 101.

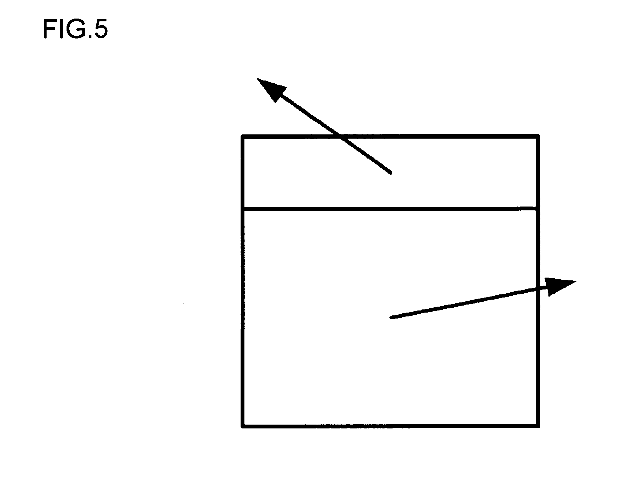

FIG. 5 is a diagram illustrating the motion vector detected for each provisional region of the macro block. To use a case where the provisional region dividing unit 101 provisionally divides the macro block on the horizontal boundary at the fourth pixel from the top as illustrated in FIG. 3A as an example, the motion vector detecting unit 102 detects the motion vector with respect to each of the upper region of $16 \times 4$ and the lower region of $16 \times 12$ as illustrated in FIG. 5.

Herein, the motion vector is detected by using a block matching method. As an algorithm of detecting the motion vector, various methods are provided and include a high-speed search to perform a search by narrowing a candidate vector to be searched from various motion characteristics in addition to a full search to evaluate all candidate vectors within a designated search region. If the motion vector may be detected for each of the blocks divided by the provisional region dividing unit 101, any motion vector detecting algorithm may be used.

The actual region dividing·motion compensating unit 103 performs the motion compensating prediction from a reference image stored in the reference image memory 107 by using the motion vector of each of the provisional regions detected by the motion vector detecting unit 102. The actual region dividing·motion compensating unit 103 generates a synthesized motion compensating prediction image by synthesizing a plurality of motion compensating prediction images generated from the motion vectors of the respective provisional regions according to an order to be described below.

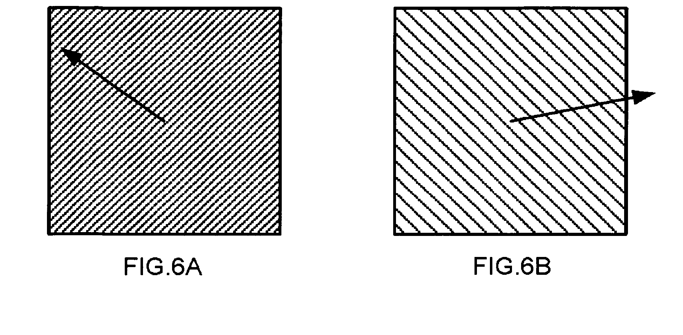

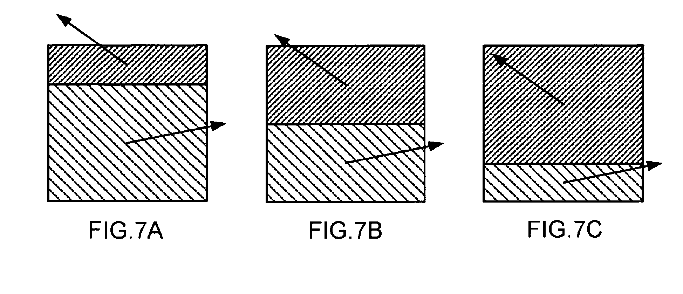

FIGS. 6A and 6B illustrate the motion compensating prediction image generated from the motion vector detected for each provisional region. FIGS. 7A to 7C illustrate the synthesized motion compensating prediction images acquired by synthesizing the motion compensating prediction images generated from the motion vectors of the respective provisional regions.

The case in which the provisional region dividing unit 101 provisionally divides the macro block on the horizontal boundary at the fourth pixel from the top as illustrated in FIG. 3A will be described as an example. As a result of detecting, by the motion vector detecting unit 102, the motion vector with respect to each of the upper region of $16 \times 4$ and the lower region of $16 \times 12$ as illustrated in FIG. 5, two motion vectors (first and second motion vectors) are present in the macro block to be encoded. The actual region dividing·motion compensating unit 103 uses the reference image for each motion vector detected by the motion vector detecting unit 102 as illustrated in FIGS. 6A and 6B and generates the image when the motion compensating prediction is performed as the size of the corresponding macro block (herein, $16 \times 16$). FIG. 6A illustrates a first motion compensating prediction image generated by using a first motion vector of the upper region of $16 \times 4$ and FIG. 6B illustrates a second motion compensating prediction image generated by using a second motion vector of the lower region of $16 \times 12$.

The actual region dividing·motion compensating unit 103 generates the synthesized motion compensating prediction image by synthesizing the first and second motion compensating prediction images illustrated in FIGS. 6A and 6B with any one pattern of the patterns illustrated in FIGS. 7A to 7C. The first and second motion compensating prediction images have the same size as the macro block to be encoded and are divided on a predetermined boundary in order to generate the synthesized motion compensating prediction image. The boundary of the macro block decided by the actual region dividing·motion compensating unit 103 is called an "actual boundary" and the area of the macro block divided by the actual boundary is called an "actual region", and as a result, the "actual boundary" and the "actual region" are distinguished from the "provisional boundary" and the "provisional region" decided by the provisional region dividing unit 101.

FIGS. 7A to 7C illustrate candidates of the actual region decided by the actual region dividing·motion compensating unit 103. FIG. 7A illustrates the horizontal boundary at the fourth pixel from the top as the actual boundary, FIG. 7B illustrates the horizontal boundary at the eighth pixel from the top as the actual boundary, and FIG. 7C illustrates the horizontal boundary at the twelfth pixel from the top as the actual boundary and in each figure, the actual region above the actual boundary is a region corresponding to the first motion compensating prediction image and the actual region below the actual boundary is a region corresponding to the second motion compensating prediction image.

The actual region dividing·motion compensating unit 103 decides the actual boundary based on an evaluation value indicating an edge strength, and the like, and divides and synthesizes the first and second motion compensating prediction images on the decided actual boundary.

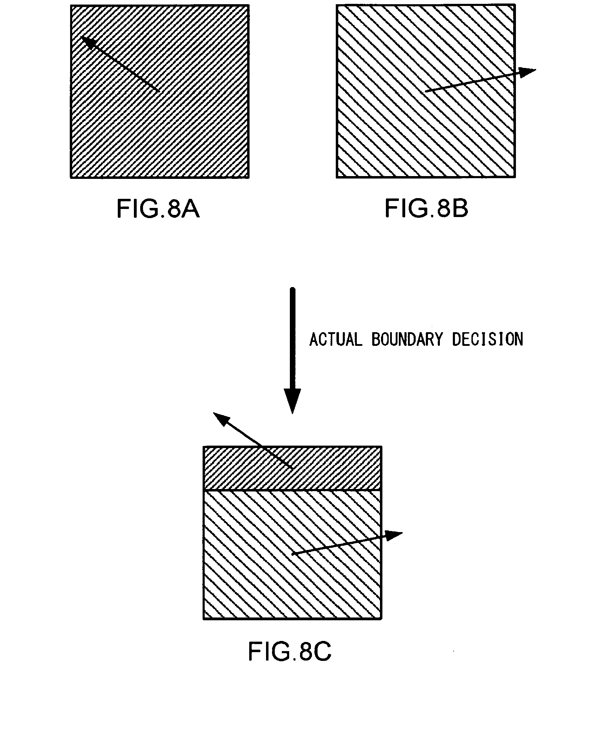

FIGS. 8A to 8C are diagrams describing a method for generating a synthesized motion compensating prediction image by synthesizing motion compensating prediction images generated from motion vectors of respective provisional regions. The actual region dividing·motion compensating unit 103 performs the motion compensating prediction of the region above the actual boundary as the first motion compensating prediction image and performs the motion compensating prediction of the region below the actual boundary as the second motion compensating prediction image, by using the first motion compensating prediction image corresponding to the first motion vector of FIG. 8A and the second motion compensating prediction image corresponding to the second motion vector of FIG. 8B after deciding the actual boundary. In this example, the region corresponding to the first motion compensating prediction image is replicated to the region of $16 \times 4$ above the actual boundary, and as a result, the region corresponding to the second motion compensating prediction image is replicated to the region of $16 \times 12$ below the actual boundary.

Herein, the horizontal region division is described as an example, but the vertical region division may be performed in the same method. At this time, the case in which the actual boundary candidates are provided as three types of FIGS. 7A to 7C is described, but the candidates of the actual boundary may be further increased. However, as described below, the relationship with an orthogonal conversion size of the orthogonal conversion·quantization unit 104 needs to be fully considered.

Referring back to FIG. 1, the subtraction unit 108 calculates a predicted residual component by a difference between an original image to be encoded and the motion compensating prediction image calculated by the actual region dividing·motion compensating unit 103, and transfers the calculated predicted residual component to the orthogonal conversion·quantization unit 104. The orthogonal conversion·quantization unit 104 performs orthogonal conversion·quantization of the predicted residual component.

Herein, the orthogonal conversion·quantization unit 104 performs orthogonal conversion by using an orthogonal conversion size corresponding to the size of the motion compensating prediction. That is, when $16 \times 4/16 \times 8/16 \times 12$ (the multiple of 4 in the vertical direction) is permitted as the size of the motion compensating prediction, the orthogonal conversion size of at least $16 \times 4$, $8 \times 4$, or $4 \times 4$ (the multiple of 4 in the vertical direction) is allowed to be used. As another example, when $16 \times 2/16 \times 4/16 \times 6/16 \times 8/16 \times 10/16 \times 12$ (the multiple of 2 in the vertical direction) is permitted as the size of the motion compensating prediction, the orthogonal conversion size of at least $16 \times 2$, $8 \times 2$, or $4 \times 2$ (the multiple of 2 in the vertical direction) is allowed to be used. As a result, when a prediction error of the motion compensating prediction is orthogonally converted, a boundary of the motion compensating prediction is not included in a prediction error set which is orthogonally converted. Therefore, orthogonal conversion efficiency may be prevented from deteriorating by orthogonally converting a pixel which is across the boundary of the motion compensating prediction as the prediction error together, and encoding efficiency may be further improved.

The variable length encoding unit 105 variable-length encodes the predicted residual component which is orthogonally converted and quantized by the orthogonal conversion·quantization unit 104 and variable-length encodes the motion vector detected by the motion vector detecting unit 102. In the related art, when the macro block is divided on a fixed boundary, the motion vectors are transmitted in a raster order (that is, an order from an upper left block to a lower right block). When a decoding side automatically decides a shape of the motion compensating prediction as described in the embodiment, the motion vectors are transmitted sequentially from the previous position of the upper and left-most pixel within each region of the motion compensating prediction in the raster order. As a result, a target region of the motion compensating prediction may be uniformly expressed by the order of transmitting the plurality of motion vectors in the related art.

The inverse quantization·inverse orthogonal conversion unit 106 performs inverse orthogonal conversion and inverse quantization of the predicted residual component which is orthogonally converted and quantized by the orthogonal conversion·quantization unit 104. Similarly as the orthogonal conversion·quantization unit 104, the inverse quantization·inverse orthogonal conversion unit 106 may perform inverse orthogonal conversion of the predicted residual component to the size corresponding to the motion compensating prediction size.

The addition unit 109 generates the reference image by adding the predicted residual component decoded by the inverse quantization·inverse orthogonal conversion unit 106 and the motion compensating prediction image calculated by the actual region dividing·motion compensating unit 103, and stores the generated reference image in the reference image memory 107.

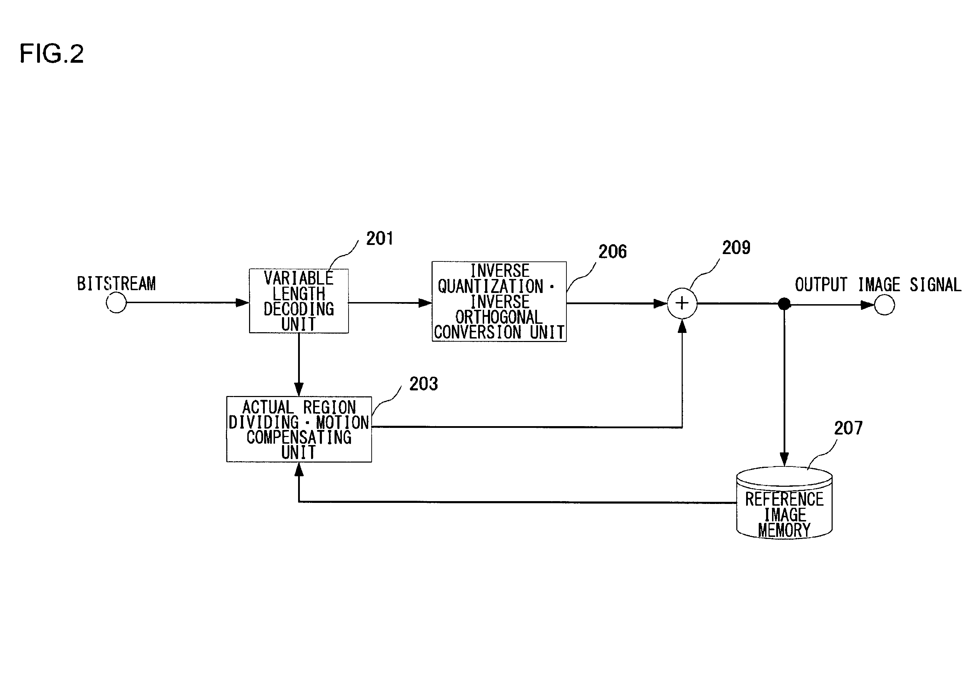

FIG. 2 is a block diagram illustrating a configuration of a moving picture decoding apparatus according to the first embodiment. The moving picture decoding apparatus according to the first embodiment includes a variable length decoding unit 201, an actual region dividing·motion compensating unit 203, an inverse quantization·inverse orthogonal conversion unit 206, an addition unit 209, and a reference image memory 207.

The variable length decoding unit 201 performs variable length decoding of a predicted residual component signal and a motion vector which are orthogonally converted and quantized. In the bitstream encoded by the moving picture encoding apparatus of FIG. 1, since the motion vector is encoded for each of the regions acquired by dividing the macro block, the motion vector is decoded for each divided region by the variable length decoding unit 201. Herein, according to an order in which the motion vectors in the macro block are decoded, the target region of the motion compensating prediction may be uniformly decided.

The actual region dividing-motion compensating unit 203 has the same function as the actual region dividing·motion compensating unit 103 of the moving picture encoding apparatus of FIG. 1 and performs the motion compensating prediction from the reference image stored in the reference image memory 207 by using the motion vector decoded by the variable length decoding unit 201. Herein, the motion vector is acquired for each divided region of the macro block. The actual region dividing·motion compensating unit 203 generates the synthesized motion compensating prediction image acquired by synthesizing the plurality of motion compensating prediction images generated from the motion vector of each divided region in the same order as in the actual region dividing·motion compensating unit 103 of the moving picture encoding apparatus of FIG. 1.

The inverse quantization·inverse orthogonal conversion unit 206 has the same function as the inverse quantization·inverse orthogonal conversion unit 106 of the moving picture encoding apparatus of FIG. 1 and performs inverse orthogonal conversion and inverse quantization of the predicted residual component decoded by the variable length decoding unit 201.

The addition unit 209 adds the predicted residual component decoded by the inverse quantization·inverse orthogonal conversion unit 206 and the motion compensating prediction image calculated by the actual region dividing·motion compensating unit 203 to decode the image signal. The reference image memory 207 is the same as the reference image memory 107 of the moving picture encoding apparatus of FIG. 1 and stores the decoded reference image.

An operation of the moving picture encoding apparatus according to the above configuration, in particular, an operation of the actual region dividing·motion compensating unit 103 will be described.

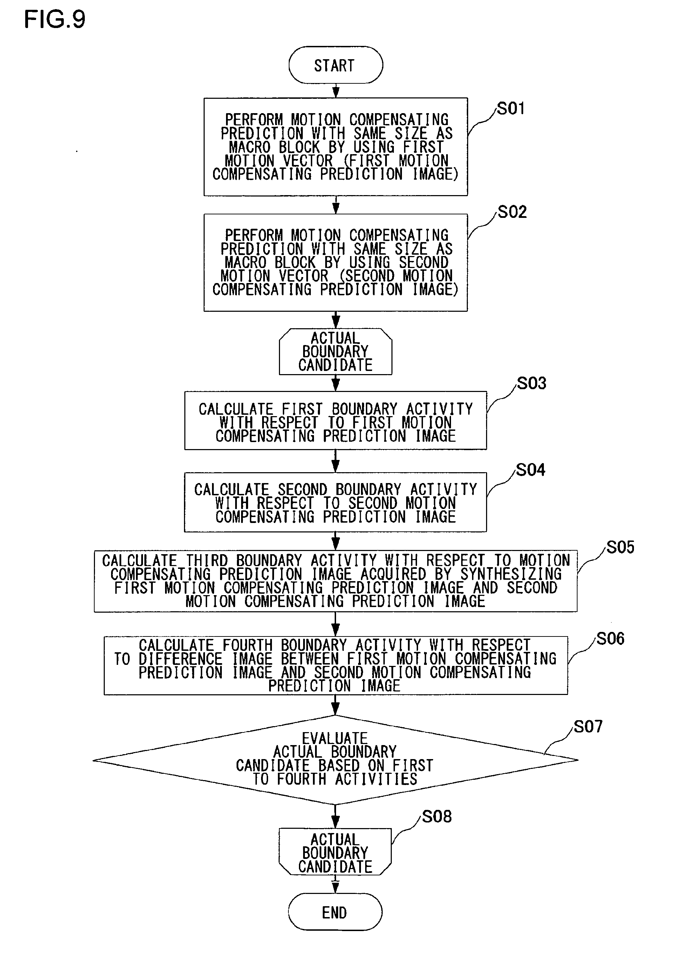

FIG. 9 is a flowchart describing a decision order of the actual region by the actual region dividing·motion compensating unit 103.

First, the motion vector detecting unit 102 detects the motion vector for each of N (N ≥ 2) provisional regions divided by the provisional region dividing unit 101. Herein, N = 2. The motion compensating prediction is performed with the same size as the macro block by using the first motion vector detected by the motion vector detecting unit 102, and the first motion compensating prediction image is generated (S01). Similarly, the motion compensating prediction is performed with the same size as the macro block by using the second motion vector detected by the motion vector detecting unit 102, and the second motion compensating prediction image is generated (S02).

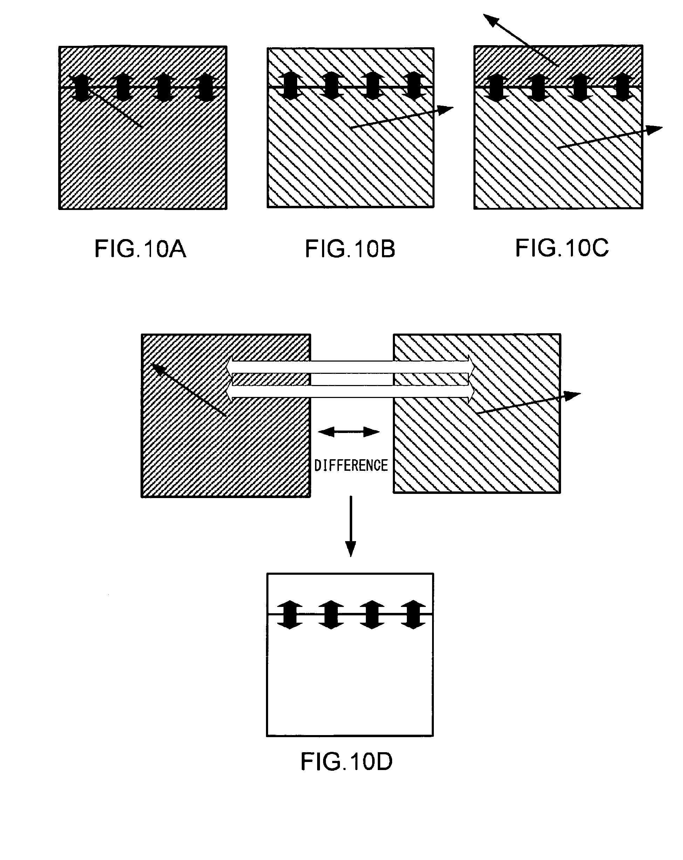

Next, first to fourth activities illustrated in FIGS. 10A to 10D are calculated with respect to each candidate of the actual boundary (S03 to S06). However, steps S03 to S06 may be performed in different orders. Further, the activities are not calculated with respect to all of steps S03 to S06 but only an activity desired to be used for boundary evaluation may be, of course, calculated.

First, as illustrated in FIG. 10A, a boundary activity (first activity) associated with the actual boundary candidate is calculated with respect to the first motion compensating prediction image (S03). Herein, the sum of absolute differences (SAD) between two pixels which are across the actual boundary candidate is used in the activity. Since the first activity has a large value at the edge of the object and the like, the larger the value is, the more dividing the region on the corresponding boundary improves the prediction efficiency of the motion compensating prediction. Similarly, as illustrated in FIG. 10B, a boundary activity (second activity) associated with the actual boundary candidate is calculated with respect to the second motion compensating prediction image (S04). The larger the value of the second activity is, the more dividing the region on the corresponding boundary improves the prediction efficiency of the motion compensating prediction, like the first activity.

Herein, a calculation method of the first activity and the second activity when the actual boundary candidate is not defined on a 1-pixel interval boundary will be described. When the actual boundary candidate is defined at an n (n ≥ 2)-pixel interval, a boundary activity associated with a predetermined actual boundary candidate is calculated by filtering and using a boundary activity of a region where the actual boundary candidate is not defined around the corresponding actual boundary candidate Y.

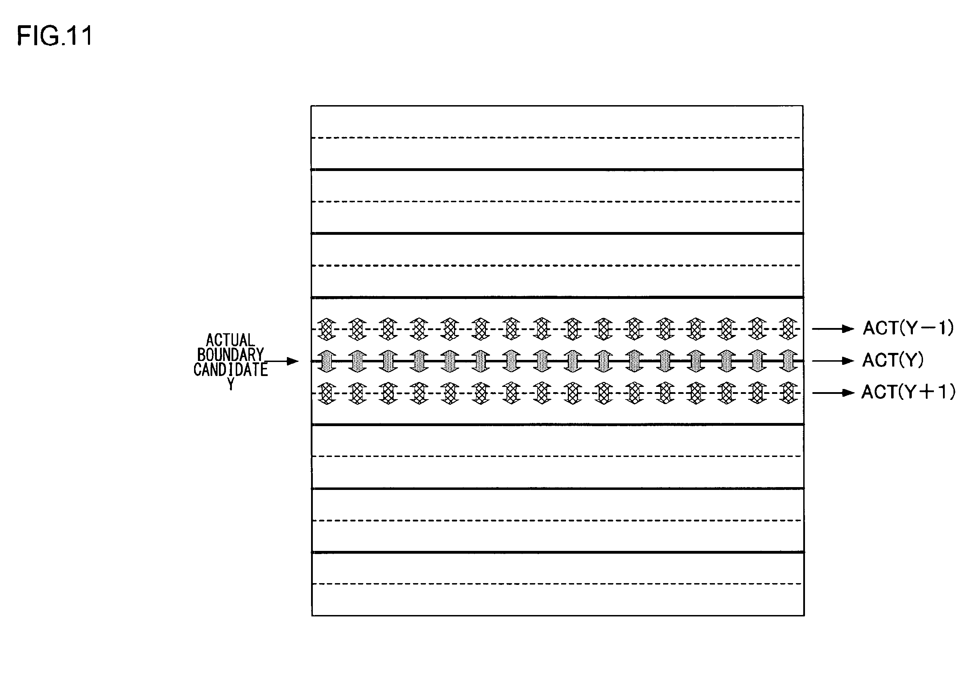

FIG. 11 is a diagram describing an example of calculating the first activity and the second activity when the actual boundary candidate is defined at a 2-pixel interval. In FIG. 11, the actual boundary candidate is set at the 2-pixel interval (2, 4, 6, 8, 10, 12, and 14) with respect to the macro block of 16 × 16 pixels. In the figure, the position of the actual boundary candidate is marked with a solid line and a position where the actual boundary candidate is not set is marked with dotted lines. The first and second activities at the actual boundary position Y are acquired by an equation below, by considering activities at peripheral positions Y-1 and Y+1 where the actual boundary candidate is not set.

$$\text{New activity (Y)} = (ACT(Y-1) + 2 * ACT(Y) + ACT(Y+1) + 2)/4$$

Herein, ACT(Y), ACT(Y-1), and ACT(Y+1) are boundary activities described in FIGS. 10A and 10B at the positions Y, Y-1, and Y+1, respectively.

As such, when the actual boundary is set at the 2-pixel interval, the activities at the positions Y-1 and Y+1 which are not used as the actual boundary candidate is allowed to influence the activity at the position Y used as the actual boundary candidate. As a result, for example, even when a precipitous edge is generated at the position not used as the boundary candidate, an activity at the position of the precipitous edge may be reflected to the activity at the boundary candidate position. Activities at positions which are out of the candidates may be considered without setting all boundaries as the boundary candidates at every pixel, which may contribute to appropriate actual boundary judgment while suppressing a calculation amount.

In this example, a filtering coefficient of activity calculation is 1:2:1, but filtering may be, of course, performed with other coefficients. The actual boundary candidates may be are at a 3 or more pixel interval, not at the 2-pixel interval. For example, when the actual boundary candidates are at a 4-pixel interval, the first and second activities at the actual boundary position Y are acquired by an equation below based on a filtering coefficient 1:2:4:2:1, by considering activities at peripheral positions Y-2, Y-1, Y+1, and Y+2 where the actual boundary candidate is not set.

$$\text{New activity (Y)} = (\text{ACT}(Y-2) + 2 * \text{ACT}(Y-1) + 4 *$$

$$\text{ACT}(Y) + 2 * \text{ACT}(Y+1) + \text{ACT}(Y+2) + 5)/10$$

Continuously, as illustrated in FIG. 10C, a boundary activity (third activity) associated with the actual boundary candidate is calculated with respect to the synthesized motion compensating prediction image in which the region above the actual boundary candidate in the macro block is subjected to the motion compensating prediction as the first motion compensating prediction image and the region below the actual boundary candidate is synthesized as the second motion compensating prediction image (S05). Since the third activity is the sum of absolute differences between two pixels which are across the actual boundary candidate, the third activity is the sum of absolute differences of pixel values between the first motion compensating prediction image and the second motion compensating prediction image positioned above and below the actual boundary candidate. Therefore, as the value of the third activity is smaller, the boundary of the synthesized motion compensating prediction image is more flexible, and as a result, a high-frequency component is hardly generated in a predicted error signal, thereby improving the prediction efficiency of the motion compensating prediction.
Herein, in the case of the third activity, a boundary activity associated with a predetermined actual boundary candidate may be, of course, calculated by filtering and using the boundary activity of the area where the actual boundary candidate is not defined around the corresponding actual boundary candidate Y.

Lastly, as illustrated in FIG. 10D, a boundary activity (fourth activity) associated with the actual boundary candidate is calculated with respect to a difference image between the first motion compensating prediction image and the second motion compensating prediction image(S06). Since the fourth activity has a large value at the edge of the object, the larger the value is, the more dividing the region on the corresponding boundary improves the prediction efficiency of the motion compensating prediction.
Herein, in the case of the fourth activity, a boundary activity associated with a predetermined actual boundary candidate may be, of course, calculated by filtering and using the boundary activity of the area where the actual boundary candidate is not defined around the corresponding actual boundary candidate Y.

After all of the activities used for boundary evaluation are calculated, the actual boundary candidate is evaluated by using a predefined evaluation value (S07). For example, the evaluation value is defined as follows.

$$\text{Evaluation value} = -A * \text{ACT1} - B * \text{ACT2} + C * \text{ACT3} - D$$

$$* \text{ACT4}$$

Herein, ACT1 denotes a first activity value, ACT2 denotes a second activity value, ACT3 denotes a third activity value, and ACT4 denotes a fourth activity value. A, B, C, and D are integers equal to or more than 0.

The evaluation value is calculated with respect to all of the actual boundary candidates and an actual boundary candidate having a minimum value is decided as a final actual boundary (S08).

Herein, the actual boundary and the provisional boundary are preferably the same, but the decided actual boundary is not particularly the same as the provisional boundary. The provisional boundary for detecting the motion vector is a boundary for the encoding side to desire an appropriate motion vector and may be calculated by using even an original image to be encoded, which only the encoding side may use. Meanwhile, since the actual boundary needs to be calculated at both the encoding side and the decoding side, the actual boundary is judged based on the plurality of calculated motion vectors (transmitted from the decoding side) and the motion compensating prediction images thereof (that is the image which is not added with the predicted residual component). As a result, although the actual boundary and the provisional boundary are not the same as each other, a mismatch between the encoding side and the decoding side does not occur.

However, the actual boundary and the provisional boundary are different from each other, which means that a motion vector which is appropriate to the synthesized motion compensating prediction image after deciding the actual boundary is not detected, and in this case, the prediction efficiency may not particularly be improved. Therefore, when an optimal provisional boundary or an optimal motion vector, as well as an optimal actual boundary are simultaneously implemented by adjusting the provisional region set by the provisional region dividing unit 101 or adjusting the motion vector detected by the motion vector detecting unit 102, the encoding efficiency may be further improved.

Hereinafter, a configuration of optimizing the prediction efficiency of the synthesized motion compensating prediction image generated by the actual region dividing·motion compensating unit 103 by adjusting the motion vector detected by the motion vector detecting unit 102 will be described in a second embodiment. A configuration of optimizing the prediction efficiency of the synthesized motion compensating prediction image generated by the actual region dividing·motion compensating unit 103 by adjusting the provisional boundary set by the provisional region dividing unit 101 will be described in a third embodiment.

(Second Embodiment)

A moving picture encoding apparatus of the second embodiment has the same configuration as the moving picture encoding apparatus of FIG. 1, but in the second embodiment, a path for sending a signal for commanding the adjustment of the motion vector from the actual region dividing·motion compensating unit 103 to the motion vector detecting unit 102 is further added. As a result, the processing of the motion vector detecting unit 102 and the actual region dividing·motion compensating unit 103 forms a loop, and until the actual boundary decided by the actual region dividing·motion compensating unit 103 coincides with the provisional boundary by the provisional region dividing unit 101, or until the actual boundary and the provisional boundary are significantly close to each other, the motion vector detecting unit 102 adjusts the motion vector.

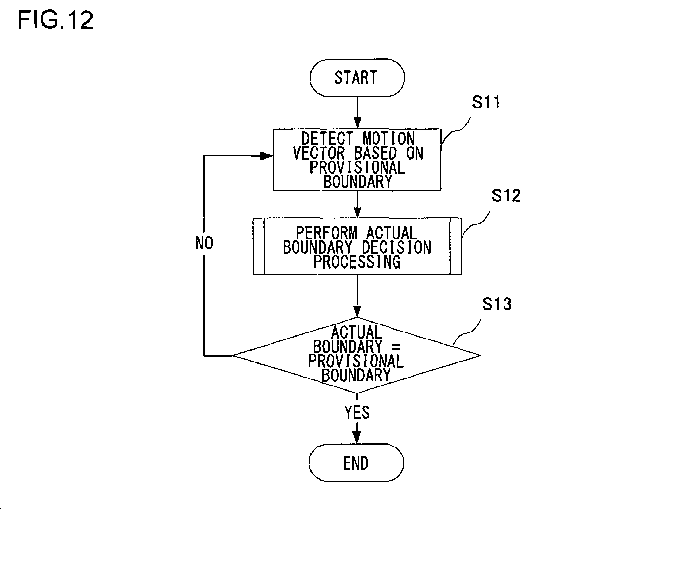

FIG. 12 is a flowchart describing an adjustment order of the motion vector of the moving picture encoding apparatus of the second embodiment. The motion vector detecting unit 102 detects the motion vector based on the provisional boundary (S11), and the actual region dividing·motion compensating unit 103 performs actual boundary decision processing based on the motion vector detected by the motion vector detecting unit 102 (S12). The actual boundary decision processing is achieved by selecting an actual boundary candidate having a best evaluation value of the boundary activity among the actual boundary candidates as described in FIG. 9.

When the actual boundary decided by the actual region dividing·motion compensating unit 103 is the same as the provisional boundary, the motion vector detection by the motion vector detecting unit 102 is terminated, but when the decided actual boundary is different from the provisional boundary, the motion vector detection by the motion vector detecting unit 102 proceeds (S13). When the actual boundary and the provisional boundary are different from each other, the motion vector detecting unit 102 performs the motion vector detection for example, in any region of two provisionally divided regions again. As a retry method, any method may be used, but for example, a method may be used, which proceeds with the motion vector detection from the position of the second minimum value while leaving the second smallest value (a second minimum value) among error evaluation values at the time of retrieving the motion vector.

A motion vector redetected by the motion vector detecting unit 102 is used, and the actual region dividing·motion compensating unit 103 performs the actual boundary decision processing again. Until the actual boundary coincides with the provisional boundary, or until the actual boundary and the provisional boundary are significantly close to each other, the motion vector detection processing by the motion vector detecting unit 102 and the actual boundary decision processing by the actual region dividing·motion compensating unit 103 are repeated.

(Third Embodiment)

A moving picture encoding apparatus of the third embodiment has the same configuration as the moving picture encoding apparatus of FIG. 1, but in the third embodiment, the provisional region dividing unit 101 sets the plurality of provisional boundary candidates, the motion vector detecting unit 102 detects the motion vector for each provisional boundary candidate, and the actual region dividing·motion compensating unit 103 performs the actual boundary decision processing for each provisional boundary. The actual region dividing·motion compensating unit 103 selects a provisional boundary having the highest prediction efficiency of the synthesized motion compensating prediction image from the plurality of provisional boundaries.

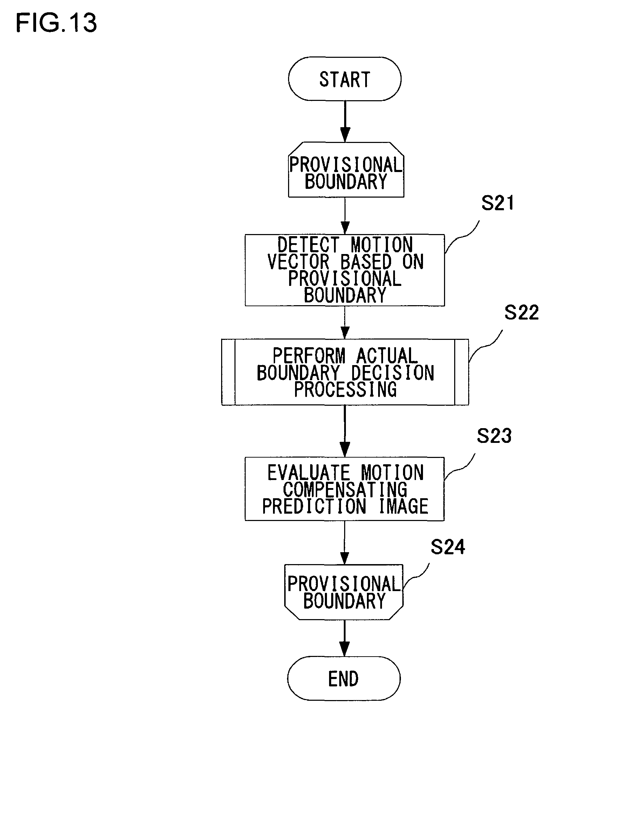

FIG. 13 is a flowchart describing an adjustment order of the provisional boundary by the moving picture encoding apparatus of the third embodiment. The provisional region dividing unit 101 sets the plurality of provisional boundary candidates and the motion vector detecting unit 102 detects the motion vector for each of the provisional regions divided in each provisional boundary candidate (S21). The actual region dividing-motion compensating unit 103 performs the actual boundary decision processing based on the motion vector detected for each provisional region divided by each provisional boundary candidate (S22) and evaluates the prediction efficiency of the synthesized motion compensating prediction image (S23). The prediction efficiency is evaluated by the SAD for a difference between the original image and the synthesized motion compensating prediction image. The evaluation is performed with respect to the plurality of provisional boundary candidates (S24) and a provisional boundary having the highest prediction efficiency of the motion compensating prediction image is selected from the provisional boundary candidates. The actual region dividing·motion compensating unit 103 finally outputs a synthesized motion compensating prediction image generated based on the actual boundary decided with respect to the motion vector for the selected provisional boundary.

As another method, as described in the second embodiment, a path for sending a signal for commanding the adjustment of the provisional boundary from the actual region dividing·motion compensating unit 103 to the provisional region dividing unit 101 may be added, and the processing of the provisional region dividing unit 101, the motion vector detecting unit 102, and the actual region dividing·motion compensating unit 103 may form the loop. Until the actual boundary decided by the actual region dividing·motion compensating unit 103 coincides with the provisional boundary by the provisional region dividing unit 101, or until the actual boundary and the provisional boundary are significantly close to each other, the provisional region dividing unit 101 adjusts the provisional boundary. When the actual boundary decided by the actual region dividing·motion compensating unit 103 is the same as the provisional boundary, the setting of the provisional boundary by the provisional region dividing unit 101 is terminated, but when the decided actual boundary is different from the provisional boundary, the provisional region dividing unit 101 sets another provisional boundary candidate, the motion vector detecting unit 102 redetects the motion vector for each provisional region divided by the reset provisional boundary, and the actual region dividing·motion compensating unit 103 performs the actual boundary decision processing again. Until the actual boundary coincides with the provisional boundary, or until the actual boundary and the provisional boundary are significantly close to each other, the provisional boundary setting processing by the provisional region dividing unit 101 and the actual boundary decision processing by the actual region dividing·motion compensating unit 103 are repeated.

Regardless of the selected method, the actual boundary which is finally decided by the actual region dividing·motion compensating unit 103 coincides with the provisional boundary set by the provisional region dividing unit 101, or the actual boundary and the provisional boundary are significantly close to each other, thereby improving the prediction efficiency.

Next, a syntax of a bitstream of the moving picture encoded by the moving picture encoding apparatuses according to the first to third embodiments will be described.

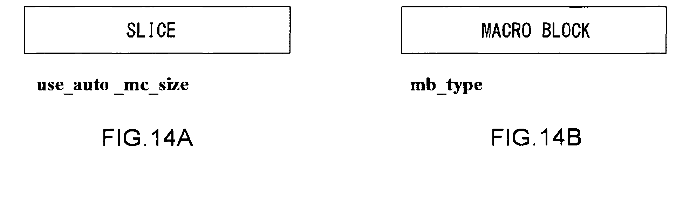

FIG. 14 illustrates a first syntax pattern based on a syntax of MPEG-4 AVC. As illustrated in FIG. 14A, first, a first flag use_auto_mc_size is transmitted, which indicates whether the decoding side automatically decides the shape of the motion compensating prediction by using a feature amount of the predicted image by the unit of a slice. When the first flag use_auto_mc_size is OFF, the motion compensating prediction is performed by fixedly dividing the macro block based on the macro block type mb_type illustrated in FIG. 14B in the related art. When the first flag use_auto_mc_size is ON, the decoding side automatically decides the shape of the motion compensating prediction by using the feature amount of the predicted image to perform the motion compensating prediction. The shape of the motion compensating prediction is judged by transmitting mb_type like the MPEG-4 AVC by the unit of the macro block.

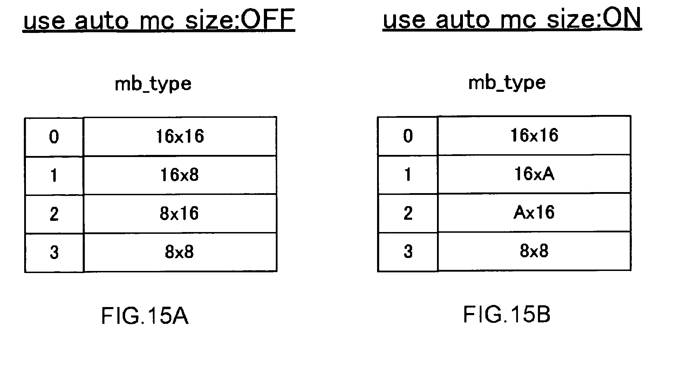

FIG. 15 illustrates semantics of the macro block type mb_type when the first flag use_auto_mc_siz is ON/OFF. In the case where the macro block type mb_type = 0, the motion compensating prediction is performed without dividing the macro block of $16 \times 16$ into regions. In the case where the macro block type mb_type = 1, when the first flag use_auto_mc_size is OFF, the motion compensating prediction is performed as $16 \times 8$, but when the first flag use_auto_mc_size is ON, the macro block is automatically divided into two regions of $16 \times A$ and $16 \times (16 - A)$ to perform the motion compensating prediction. Similarly, in the case where the macro block type mb_type = 2, when the first flag use_auto_mc_size is OFF, the motion compensating prediction is performed as $16 \times 8$, but when the first flag use_auto_mc_size is ON, the macro block is automatically divided into two regions of $A \times 16$ and $(16 - A) \times 16$ to perform the motion compensating prediction. In the case where the macro block type mb_type = 3, the motion compensating prediction is performed as the $8 \times 8$ block.

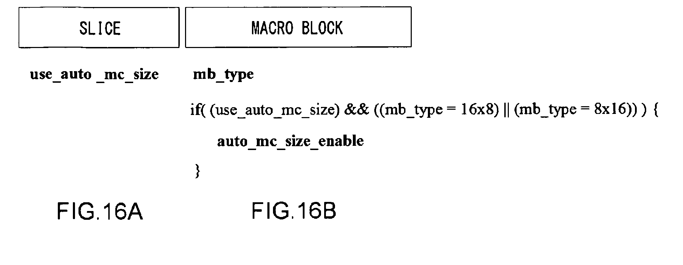

FIG. 16 illustrates a second syntax pattern in which a second flag auto_mc_size_enable is transmitted, which indicates whether the decoding side automatically decides the shape of the motion compensating prediction even by the unit of the macro block as well as the slice level. When the second flag auto_mc_size_enable is OFF, the motion compensating prediction is performed by fixedly dividing the macro block based on the macro block type mb_type in the related art like the case in which the first flag use_auto_mc_size is OFF at the slice level. When the second flag auto_mc_size_enable is ON, the decoding side automatically decides the shape of the motion compensating prediction by using the feature amount of the predicted image to perform the motion compensating prediction. When the second syntax is used, a case in which the prediction efficiency deteriorates like the case of automatically deciding the actual boundary may be excluded.

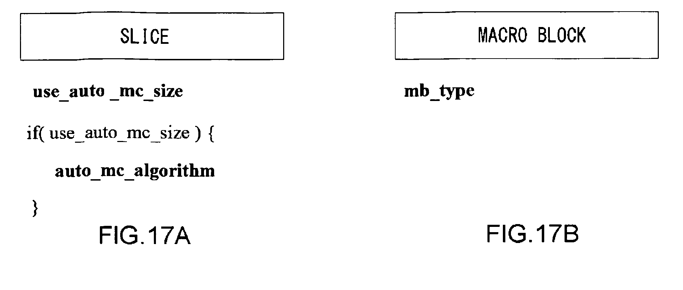

FIG. 17 illustrates a third syntax pattern of switching an algorithm in which the decoding side automatically decides the shape of the motion compensating prediction at the slice level. When the first flag use_auto_mc_size is ON by the unit of a slice, an algorithm type auto_mc_algorithm indicating an algorithm type in which the decoding side automatically decides the shape of the motion compensating prediction is transmitted. For example, in the case where the algorithm type auto_mc_algorithm = 0, the shape of the motion compensating prediction is decided based on the evaluation values using all of the first to fourth activities ACT1 to ACT4. In the case where the algorithm type auto_mc_algorithm =1, the shape of the motion compensating prediction is decided based on the evaluation values by corresponding to only the first to third activities ACT1 to ACT3 except for the fourth activity ACT4. The algorithm of deciding the shape of the motion compensating prediction may be switched by using the type of the activity used as the value of the algorithm type auto_mc_algorithm as described above. When the third syntax is used, the encoding side is allowed to judge an appropriate algorithm type and the decoding side is allowed to perform automatic division of the region, and as a result, the encoding efficiency is further improved.

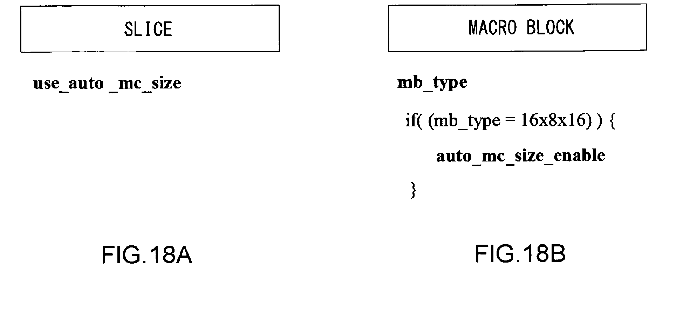

FIG. 18 is a diagram illustrating a fourth syntax pattern of not discriminating a division direction of the macro block on syntax between the horizontal direction and the vertical direction. The fourth syntax pattern is the same as the first syntax pattern in that the shape of the motion compensating prediction is judged by transmitting the macro block type mb_type by the macro block level, but different from the first syntax pattern in the semantics of the macro block type mb_type.

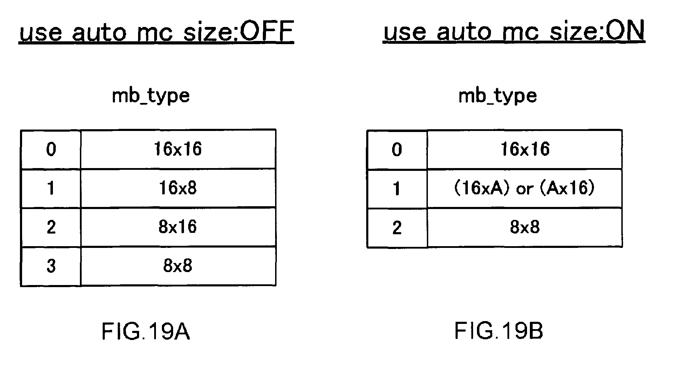

FIG. 19 is a diagram illustrating the semantics of the macro block type mb_type of the fourth syntax pattern. The fourth syntax pattern is the same as the first syntax pattern in that when the first flag use_auto_mc_size is OFF, the motion compensating prediction is performed by fixedly dividing the macro block based on the macro block type mb_type in the related art and when the first flag use_auto_mc_size is ON, the motion compensating prediction is performed by automatically deciding the shape of the motion compensating prediction at the decoding side by using the feature amount of the prediction image. However, the fourth syntax pattern is different from the first syntax pattern in that dividing the macro block into two regions of $16 \times A$ and $16 \times (16 - A)$ in the horizontal direction and dividing the macro block into two regions of $A \times 16$ and $(16 - A) \times 16$ in the vertical direction are treated without being distinguished as the macro block type mb_type = 1. When the macro block type mb_type = 1, all boundary evaluation values of the horizontal actual boundary candidate and the vertical actual boundary candidate are calculated and a boundary candidate having the minimum evaluation value is decided as the actual boundary. That is, the decoding side automatically decides the shape of the motion compensating prediction, which includes the division directions (the horizontal direction and the vertical direction). When the fourth syntax pattern is used, division direction information to distinguish the horizontal direction and the vertical direction need not be transmitted, the code amount of the macro block type mb_type is decreased and the encoding efficiency is further improved.

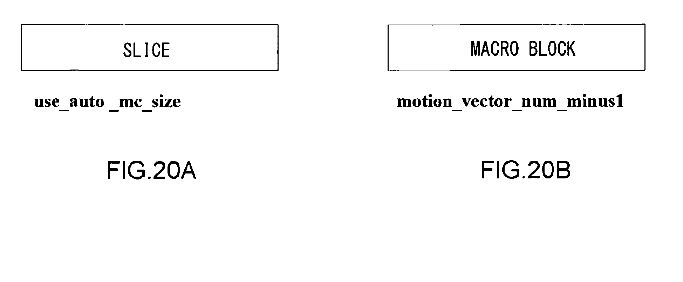

FIG. 20 is a diagram illustrating a fifth syntax pattern of deciding regional division without interlocking the regional division with the macro block type mb_type. A motion vector number motion_vector_num_minus1 is transmitted instead of the macro block type mb_type by the macro block unit. The motion vector number motion_vector_num_minus1 represents a value of (the number of motion vectors in the macro block, -1). In the embodiment of the present invention, since the region of the motion compensating prediction is divided as many as the transmitted motion vectors, when at least the number of motion vectors is transmitted, the decoding side may automatically decide the shape of the motion compensating prediction. Although an example of a case in which the number of motion vectors is two has been described in the first to third embodiments, an example of a case in which the number of motion vectors is two or more, for example, three will be described in a fifth embodiment.

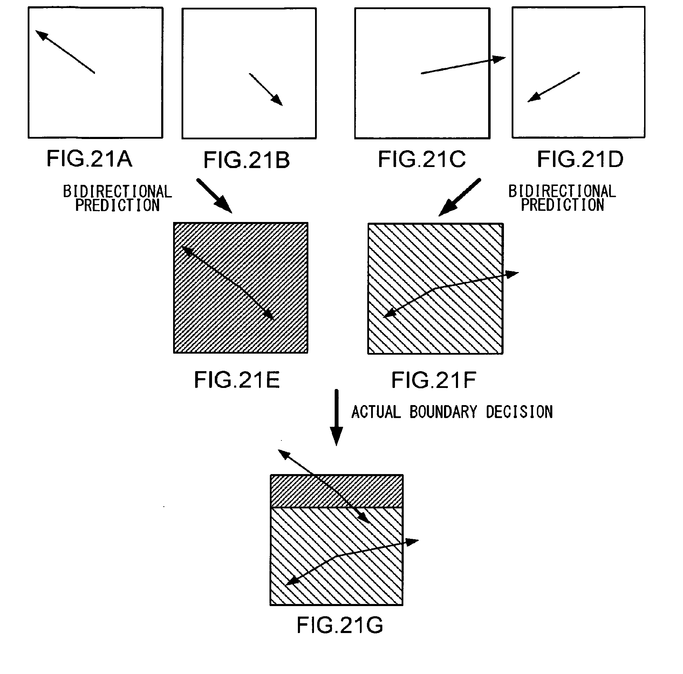

Up to now, an embodiment of the present invention associated with a unidirectional prediction used in a P picture of the MPEG has been described. Referring to FIG. 21, a case in which the embodiment of the present invention is applied to bidirectional prediction (in general, front-direction prediction and rear-direction prediction) used in a B picture will be described. Herein, the case in which the macro block is divided into two in the horizontal direction will be described as an example. The bidirectional prediction is a technique that acquires the prediction image by averaging or weighted-averaging two images acquired by performing the motion compensating prediction from two reference images.

First, the motion vector of each prediction direction (front direction or rear direction) is detected for each provisional region. FIGS. 21A and 21B illustrate the first motion vector in each prediction direction (front direction or rear direction) for the first provisional region. FIGS. 21A and 21B illustrate the second motion vector in each prediction direction (front direction or rear direction) for the second provisional region.

FIG. 21E illustrates the first motion compensating prediction image bidirectionally predicted by using the first motion vector in the front direction and the rear direction and FIG. 21F illustrates the second motion compensating prediction image bidirectionally predicted by using the second motion vector in the front direction and the rear direction.

FIG. 21G illustrates the synthesized motion compensating prediction image generated by replicating the actual region above the actual boundary of the macro block from the region corresponding to the first motion compensating prediction image and replicating the actual region below the actual boundary from the region corresponding to the second motion compensating prediction image, after deciding the actual boundary.

As described above, the embodiment of the present invention is easily applied to the bidirectional prediction, and a prediction error may be further reduced by appropriate region division while reducing the prediction error by the bidirectional prediction.

In the embodiment of the present invention, the motion vector is not directly transmitted, and the shape of the motion compensating prediction may be, of course, automatically decided by using a motion vector which is automatically calculated based on a motion vector of a neighboring block or a motion vector of a reference image.

Up to now, a single image component (luminance) has been described, but the embodiment may be applied to even a plurality of components (luminance and color difference) such as YUV4:4:4/YUV4:2:2/YUV4:2:0. However, in the motion compensating prediction, in order to implement both the luminance and the color difference, in formats in which the number of samples of the luminance and the number of samples of the color difference are different from each other, such as YUV4:2:2 and YUV4:2:0, when the region is divided based on the luminance having a lot of samples, a region division position of the color difference may be ambiguous. For example, in the format of YUV4:2:0, when the luminance is divided into 16 × 5 and 16 × 11, it is unclear whether the region division of the color difference is 8 × 2 or 8 × 3. As a countermeasure for preventing the ambiguity, there are a method of dividing the region, in advance, based on the color difference having a small number of samples, a method of determining in advance a division rule of the color difference at an ambiguous position (cut based on the center of the block), or a method of using an average value (filtering) of both motion compensating prediction images as a pixel on a boundary.

(Fourth Embodiment)

A moving picture encoding apparatus and a moving picture decoding apparatus according to the fourth embodiment have the same configuration as those of the first to third embodiments, but the moving picture encoding apparatus according to the fourth embodiment transmits two motion vectors by performing motion compensation by two-dimensionally dividing the macro block, and the moving picture decoding apparatus two-dimensionally divides the shape of the motion compensating prediction at the decoding side and performs motion compensation using two transmitted motion vectors.

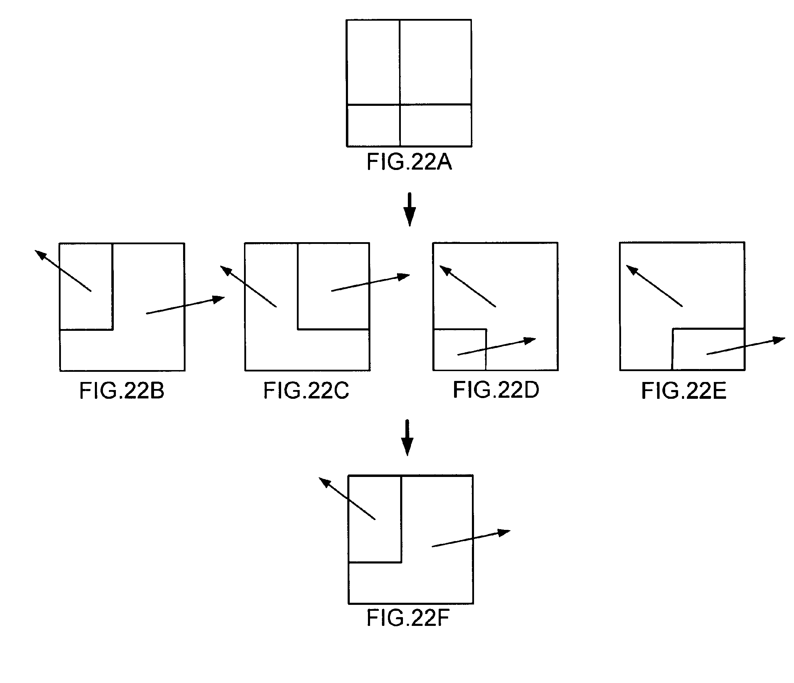

FIGS. 22A to 22F illustrate a method of two-dimensionally dividing the macro block into regions. As illustrated in FIG. 22A, a horizontal boundary and a vertical boundary are decided with respect to the macro block by executing the orders described in the first to third embodiments. By the combination of the upper or lower side of the horizontal boundary and the left or right side of the vertical boundary, four 2D division patterns of FIGS. 22B to 22E may be defined.

In the 2D division pattern of FIG. 22B, by setting the upper region of the horizontal boundary or the left region of the vertical boundary as a first region, the remaining region (the lower region of the horizontal boundary or the left region of the vertical boundary) is set as a second region.

In the 2D division pattern of FIG. 22C, by setting the lower region of the horizontal boundary or the left region of the vertical boundary as the first region, the remaining region (the upper region of the horizontal boundary or the right region of the vertical boundary) is set as the second region.

In the 2D division pattern of FIG. 22D, by setting the upper region of the horizontal boundary or the right region of the vertical boundary as the first region, the remaining region (the lower region of the horizontal boundary or the left region of the vertical boundary) is set as the second region.

In the 2D division pattern of FIG. 22E, by setting the upper region of the horizontal boundary or the left region of the vertical boundary as a first region, the remaining region (the lower region of the horizontal boundary or the right region of the vertical boundary) is set as the second region.

FIG. 22F illustrates a synthesized motion compensation prediction image which may be acquired by selecting one from the four 2D division patterns, and replicating a corresponding region of the motion compensating prediction image by the first motion vector to the first region and a corresponding region of the motion compensating prediction image by the second motion vector to the second region, respectively.

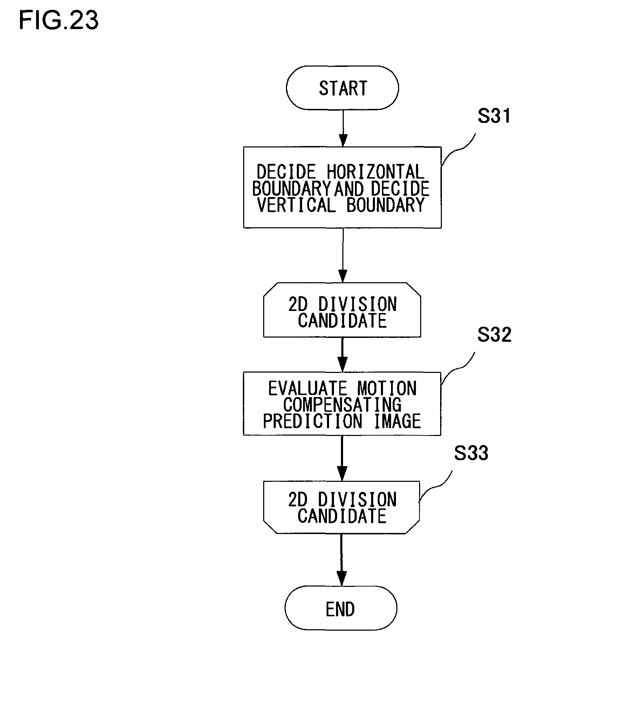

FIG. 23 is a flowchart describing an order of performing motion compensation by two-dimensionally dividing the macro block. First, both boundaries of the horizontal boundary and the vertical boundary are determined in the same method as the first embodiment (S31). Next, an evaluation value of a boundary activity is calculated with respect to a 2D division region of the macro block which is divided into two by combining the horizontal boundary and the vertical boundary (S32). For example, when a pixel value in i as an X coordinate and j as a Y coordinate is $A_{i,j}$, in the macro block, in the case where i = a to i = b is applied to a horizontal activity of a horizontal boundary j, on the boundary of the 2D division region and j = c to j = d is applied to a vertical activity of a vertical boundary i, a 2D average activity may be defined as follows.

$$2D \text{ average activity} = \Sigma_{i=a}^{b} |A_{i,\,j} - A_{i,j-1}| / (b-a) + \Sigma_{j=c}^{d} |A_{i,j} - A_{i-1,j}| / (d-c)$$

By using the 2D average activity as the evaluation value, it is possible to evaluate the 2D region division without depending on the number of samples used for activity calculation. By repeating step S32 in all of the 2D division patterns (herein, four patterns) (S33), a 2D division candidate having a minimum evaluation value is selected and the synthesized motion compensating prediction image is generated.

As described above, in the fourth embodiment, since the motion compensating prediction may be performed in a more flexible shape than in the first embodiment, the encoding efficiency is further improved.

(Fifth Embodiment)

A moving picture encoding apparatus and a moving picture decoding apparatus according to the fifth embodiment have the same configuration as the first to third embodiments, but the moving picture encoding apparatus according to the fifth embodiment performs motion compensation by dividing the macro block into three by using three motion vectors and transmits three motion vectors, and the moving picture decoding apparatus performs motion compensation by dividing the shape of the motion compensating prediction into three at the decoding side by using the three transmitted motion vectors.

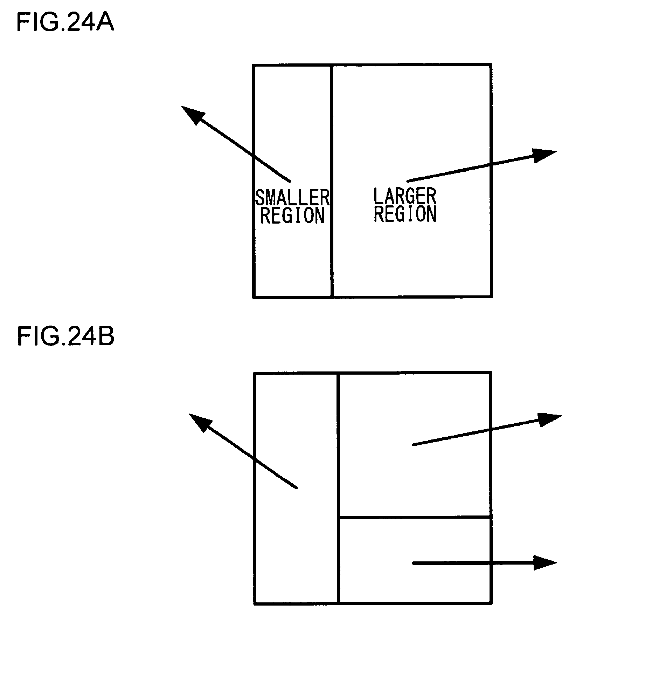

FIGS. 24A and 24B illustrate a method of dividing the macro block into three regions. As illustrated in FIG. 24A, first, the macro block is divided into two by the horizontal boundary or the vertical boundary by executing the orders described in the first to third embodiments. Next, as illustrated in FIG. 24B, the horizontal boundary or the vertical boundary is further set with respect to the larger region between two divided regions, to divide the larger region into two. As a result, the macro block is divided into three regions to detect the motion vector in each region.

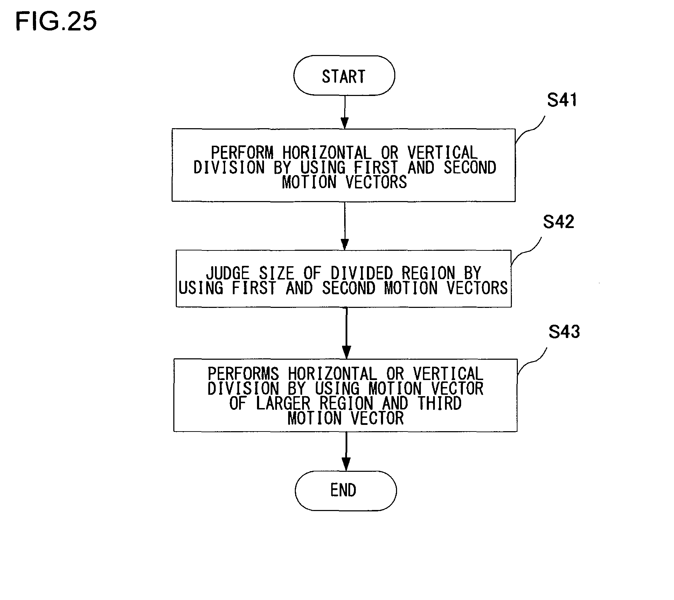

FIG. 25 is a flowchart describing an order of performing motion compensation by dividing the macro block in three. Three motion vectors need to be detected and transmitted, in order to perform motion compensation by dividing the macro block into three regions. First, in the same method as the first embodiment, a first motion vector and a second motion vector are used, the macro block is divided into regions horizontally or vertically, and motion compensation is performed (S41). Next, the sizes of the regions divided by the first motion vector and the second motion vector are compared and the larger region is determined (S42). The reason is that it may be anticipated that the larger region is more greatly influenced by region division and prediction efficiency in the larger region is further improved. When the sizes of the regions are the same as each other, a region that will take priority is decided in advance. Lastly, the larger region is regionally divided horizontally or vertically by using the motion vector of the larger region (the first motion vector or the second motion vector) and a third motion vector and is subjected to motion compensation (S43).

As described above, in the fifth embodiment, the region of the motion compensating prediction may be divided into three by using three motion vectors. As a result, since it is possible to deal with even a plurality of small motions, the encoding efficiency is further improved. By further performing region division in the same method, the region of the motion compensating prediction is divided into four or more to make the number of motion vectors be 4 or more.

As described above, according to the embodiments of the present invention, the feature amounts of the plurality of prediction images which may be acquired from the plurality of motion vectors are used, and the decoding side automatically decides the shape of the motion compensating prediction to vary the shape of the motion compensating prediction without transmitting information on the motion compensating prediction shape pattern. Accordingly, flexible motion compensating prediction is possible in various shapes, and as a result, the prediction error of the motion compensating prediction may be reduced without increasing the code amount of the additional information, thereby improving the encoding efficiency.

While the encoding side detects the motion vector, by evaluating the motion vector while calculating the actual boundary decided at the decoding side, both the optimal motion vector and the optimal actual boundary are achieved. As a result, the prediction efficiency of the motion compensating prediction is improved. The decoding side may decode the moving picture just by performing the motion compensating prediction by using the actual boundary calculated from the transmitted motion vector.

The encoding and decoding may be implemented by firmware stored in a ROM (Read Only Memory) or a flash memory or software such as a computer as well as transmission, accumulation, and receiving apparatuses using hardware. The firmware program and the software program may be recorded and provided in a computer-readable recording medium, provided from a server through a wired or wireless network, and provided as a data broadcast of terrestrial or satellite digital broadcasting.

As set forth above, the present invention has been described based on the embodiments. The embodiments are only for illustration, and it will be understood by those skilled in the art that various modified examples may be made by the combinations of the components or the processing processes of the embodiments and the modified examples are also included in the scope of the present invention.

DESCRIPTION OF REFERENCE NUMERALS

101: provisional region dividing unit, 102: motion vector detecting unit, 103: actual region dividing-motion compensating unit, 104: orthogonal conversion·quantization unit, 105: variable-length encoding unit, 106: inverse quantization·inverse orthogonal conversion unit, 107: reference image memory, 108: subtraction unit, 109: addition unit, 201: variable-length decoding unit, 203: actual region dividing·motion compensating unit, 206: inverse quantization·inverse orthogonal conversion unit, 207: reference image memory, 209: addition unit.

INDUSTRIAL APPLICABILITY

The present invention may be used in the encoding technique of the moving picture, in particular, the encoding technique of the moving picture using the motion compensating prediction.

**Claims**

1.  A moving picture encoding apparatus, comprising:

    a provisional region dividing unit configured to divide a block to be encoded into a plurality of provisional regions on a predetermined provisional boundary;
    a motion vector detecting unit configured to detect a motion vector with respect to each provisional region;
    a motion compensating unit configured to generate a synthesized prediction block by generating a plurality of prediction blocks corresponding to the block to be encoded from a reference image by using the motion vector of each provisional region, deciding an actual boundary based on activities of the plurality of prediction blocks, and joining regions acquired by dividing the each prediction block on the actual boundary among the respective prediction blocks; and
    an encoding unit configured to encode a prediction difference block acquired by subtracting the synthesized prediction block from the block to be encoded and the motion vector of each provisional region.

2.  The moving picture encoding apparatus according to claim 1, wherein
    the motion compensating unit calculates an evaluation value corresponding to an actual boundary candidate based un activities among respective adjacent pixels of the plurality of prediction blocks and decides an actual boundary among a plurality of actual boundary candidates by using the evaluation value.

3.  The moving picture encoding apparatus according to claim 2, wherein
    the actual boundary candidates are installed at a predetermined pixel interval of a 2-pixel interval or more, and the motion compensating unit calculates the evaluation value corresponding to the actual boundary candidate based on an activity of the actual boundary candidate and an activity of a boundary which is adjacent to the actual boundary candidate and is not set as an actual boundary candidate.

4.  The moving picture encoding apparatus according to any one of claims 1 to 3, wherein
    when the actual boundary decided by the motion compensating unit is different from the provisional boundary, the motion vector detecting unit resets a motion vector of at least one provisional region to a value different from a previous one, and the motion compensating unit redecides the actual boundary based on the activities of the plurality of prediction blocks generated by using the motion vector of each provisional region adopting the reset motion vector in a provisional region to be reset.

5.  The moving picture encoding apparatus according to any one of claims 1 to 3, wherein
    the provisional region dividing unit sets a plurality of provisional boundary candidates and divides the block to be encoded into a plurality of provisional regions for each provisional boundary candidate,
    the motion vector detecting unit detects the motion vector for each provisional region in each provisional boundary candidate, and
    the motion compensating unit uses the motion vector of each provisional region in each provisional boundary candidate, generates candidates of the synthesized prediction block, and selects a candidate of the synthesized prediction block having the highest prediction efficiency as the final synthesized prediction block.

6.  The moving picture encoding apparatus according to any one of claims 1 to 3, wherein
    when the actual boundary decided by the motion compensating unit is different from the provisional boundary, the provisional region dividing unit sets another provisional boundary, the motion vector detecting unit redetects the motion vector for each of provisional regions divided on the reset provisional boundary, and the motion compensating unit redecides the actual boundary based on the activities of the plurality of prediction blocks generated by using the motion vector of each provisional region which is redetected.

7.  The moving picture encoding apparatus according to any one of claims 1 to 6, wherein
    the activity of the prediction block is a boundary activity evaluating pixel values across the actual boundary on which the prediction block is divided.

8. A moving picture encoding method, comprising:

dividing a block to be encoded into a plurality of provisional regions on a predetermined provisional boundary;
detecting a motion vector with respect to each provisional region;
generating a synthesized prediction block by generating a plurality of prediction blocks corresponding to the block to be encoded from a reference image by using the motion vector of each provisional region, deciding an actual boundary based on activities of the plurality of prediction blocks, and joining regions acquired by dividing the each prediction block on the actual boundary among the respective prediction blocks; and
encoding a prediction difference block acquired by subtracting the synthesized prediction block from the block to be encoded and the motion vector of each provisional region.

9. A moving picture encoding program that allows a computer to execute functions, comprising:

a function of dividing a block to be encoded into a plurality of provisional regions on a predetermined provisional boundary;
a function of detecting a motion vector with respect to each provisional region;
a function of generating a synthesized prediction block by generating a plurality of prediction blocks corresponding to the block to be encoded from a reference image by using the motion vector of each provisional region, deciding an actual boundary based on activities of the plurality of prediction blocks, and joining regions acquired by dividing the each prediction block on the actual boundary among the respective prediction blocks; and
a function of encoding a prediction difference block acquired by subtracting the synthesized prediction block from the block to be encoded and the motion vector of each provisional region.

10. A moving picture decoding apparatus, comprising:

a decoding unit configured to decode a plurality of motion vectors for a block to be decoded, from an encoded stream;
a motion compensating unit configured to generate a synthesized prediction block by using a plurality of motion vectors, generating a plurality of prediction blocks corresponding to the block to be decoded from a reference image, deciding a boundary based on activities of the plurality of prediction blocks, and joining regions acquired by dividing the each prediction block on the boundary among the respective prediction blocks; and
an addition unit configured to generate a decoded image by adding the synthesized prediction block and the decoded prediction difference block from the block to be decoded.

11. The moving picture decoding apparatus according to claim 10, wherein
the motion compensating unit calculates an evaluation value corresponding to a boundary candidate based on activities among respective adjacent pixels of the plurality of prediction blocks and decides a boundary among a plurality of boundary candidates by using the evaluation value.

12. The moving picture decoding apparatus according to claim 11, wherein
the boundary candidates are installed at a predetermined pixel interval of a 2-pixel interval or more, and the motion compensating unit calculates the evaluation value corresponding to the boundary candidate based on an activity of the boundary candidate and an activity of a boundary which is adjacent to the boundary candidate and is not set as a boundary candidate.

13. The moving picture decoding apparatus according to any one of claims 10 to 12, wherein
the activity of the prediction block is a boundary activity evaluating pixel values across the boundary on which the prediction block is divided.

14. A moving picture decoding method, comprising:

decoding a plurality of motion vectors for a block to be decoded, from an encoded stream;
generating a synthesized prediction block by using a plurality of motion vectors, generating a plurality of prediction blocks corresponding to the block to be decoded from a reference image, deciding a boundary based on activities of the plurality of prediction blocks, and joining regions acquired by dividing the each prediction block on the boundary among the respective prediction blocks; and
generating a decoded image by adding the synthesized prediction block and the decoded prediction difference block from the block to be decoded.

**15.** A moving picture decoding program that allows a computer to execute functions, comprising:

a function of decoding a plurality of motion vectors for a block to be decoded, from an encoded stream;
a function of generating a synthesized prediction block by using a plurality of motion vectors, generating a plurality of prediction blocks corresponding to the block to be decoded from a reference image, deciding a boundary based on activities of the plurality of prediction blocks, and joining regions acquired by dividing the each prediction block on the boundary among the respective prediction blocks; and
a function of generating a decoded image by adding the synthesized prediction block and the decoded prediction difference block from the block to be decoded.

FIG.1

BITSTREAM

105 — VARIABLE LENGTH ENCODING UNIT

106 — INVERSE QUANTIZATION · INVERSE ORTHOGONAL CONVERSION UNIT

107 — REFERENCE IMAGE MEMORY

104 — ORTHOGONAL CONVERSION · QUANTIZATION UNIT

103 — ACTUAL REGION DIVIDING · MOTION COMPENSATING UNIT

101 — PROVISIONAL REGION DIVIDING UNIT

102 — MOTION VECTOR DETECTING UNIT

108

109

INPUT IMAGE SIGNAL

# FIG.2

BITSTREAM → VARIABLE LENGTH DECODING UNIT (201) → INVERSE QUANTIZATION · INVERSE ORTHOGONAL CONVERSION UNIT (206) → (+) (209) → OUTPUT IMAGE SIGNAL

ACTUAL REGION DIVIDING · MOTION COMPENSATING UNIT (203)

REFERENCE IMAGE MEMORY (207)

EP 2 557 791 A1

FIG.3A          FIG.3B          FIG.3C

FIG.4A                    FIG.4B                    FIG.4C

FIG.5

FIG.6A

FIG.6B

FIG.7A

FIG.7B

FIG.7C

FIG.8A

FIG.8B

ACTUAL BOUNDARY DECISION

FIG.8C

# FIG.9

```
                        ┌─────────────┐
                        │    START    │
                        └──────┬──────┘
                               │
                               ▼
        ┌──────────────────────────────────┐
        │   PERFORM MOTION COMPENSATING     │ ⟋S01
        │   PREDICTION WITH SAME SIZE AS    │
        │   MACRO BLOCK BY USING FIRST      │
        │   MOTION VECTOR (FIRST MOTION     │
        │  COMPENSATING PREDICTION IMAGE)   │
        └──────────────┬───────────────────┘
                       │
                       ▼
        ┌──────────────────────────────────┐
        │   PERFORM MOTION COMPENSATING     │ ⟋S02
        │   PREDICTION WITH SAME SIZE AS    │
        │   MACRO BLOCK BY USING SECOND     │
        │   MOTION VECTOR (SECOND MOTION    │
        │  COMPENSATING PREDICTION IMAGE)   │
        └──────────────┬───────────────────┘
                       │
                       ▼
               ┌────────────────┐
               │    ACTUAL      │
               │   BOUNDARY     │
               │   CANDIDATE    │
               └───────┬────────┘
                       │
                       ▼
        ┌──────────────────────────────────┐
        │  CALCULATE FIRST BOUNDARY ACTIVITY│ ⟋S03
        │    WITH RESPECT TO FIRST MOTION   │
        │   COMPENSATING PREDICTION IMAGE   │
        └──────────────┬───────────────────┘
                       │
                       ▼
        ┌──────────────────────────────────┐
        │ CALCULATE SECOND BOUNDARY ACTIVITY│ ⟋S04
        │    WITH RESPECT TO SECOND MOTION  │
        │   COMPENSATING PREDICTION IMAGE   │
        └──────────────┬───────────────────┘
                       │
                       ▼
  ┌────────────────────────────────────────────────┐
  │ CALCULATE THIRD BOUNDARY ACTIVITY WITH RESPECT  │ ⟋S05
  │ TO MOTION COMPENSATING PREDICTION IMAGE ACQUIRED│
  │ BY SYNTHESIZING FIRST MOTION COMPENSATING       │
  │ PREDICTION IMAGE AND SECOND MOTION              │
  │ COMPENSATING PREDICTION IMAGE                    │
  └──────────────┬─────────────────────────────────┘
                 │
                 ▼
  ┌────────────────────────────────────────────────┐
  │    CALCULATE FOURTH BOUNDARY ACTIVITY WITH      │ ⟋S06
  │ RESPECT TO DIFFERENCE IMAGE BETWEEN FIRST MOTION│
  │ COMPENSATING PREDICTION IMAGE AND SECOND MOTION │
  │    COMPENSATING PREDICTION IMAGE                 │
  └──────────────┬─────────────────────────────────┘
                 │
                 ▼
           ╱─────────────────────────╲
          ╱         EVALUATE           ╲     ⟋S07
         ╱      ACTUAL BOUNDARY         ╲
         ╲   CANDIDATE BASED ON FIRST   ╱
          ╲     TO FOURTH ACTIVITIES   ╱
           ╲─────────────┬───────────╱
                         │
                         ▼
                 ┌────────────────┐
                 │    ACTUAL      │ ⟋S08
                 │   BOUNDARY     │
                 │   CANDIDATE    │
                 └───────┬────────┘
                         │
                         ▼
                  ┌─────────────┐
                  │     END     │
                  └─────────────┘
```

FIG.10A  FIG.10B  FIG.10C

DIFFERENCE

FIG.10D

FIG.11

FIG.12

```
                    ┌─────────┐
                    │  START  │
                    └────┬────┘
                         │                          S11
                         ▼
          ┌──────────────────────────┐
          │   DETECT MOTION          │
     ┌───▶│ VECTOR BASED ON          │
     │    │   PROVISIONAL            │
     │    │    BOUNDARY              │
     │    └──────────┬───────────────┘
     │               │                             S12
     │               ▼
     │    ╓──────────────────────────╖
     │    ║   PERFORM ACTUAL         ║
 NO  │    ║ BOUNDARY DECISION        ║
     │    ║    PROCESSING            ║
     │    ╙──────────┬───────────────╜
     │               │                             S13
     │               ▼
     │          ╱──────────╲
     │         ╱   ACTUAL    ╲
     └────────▕  BOUNDARY =    ▏
              ╲ PROVISIONAL   ╱
               ╲  BOUNDARY   ╱
                ╲──────┬────╱
                    YES │
                        ▼
                   ┌─────────┐
                   │   END   │
                   └─────────┘
```

FIG.13

```
        ┌─────────────┐
        │   START     │
        └──────┬──────┘
               │
        ┌──────▼──────┐
        │ PROVISIONAL │
        │  BOUNDARY   │
        └──────┬──────┘
               │                        S21
        ┌──────▼──────────┐
        │ DETECT MOTION   │
        │ VECTOR BASED ON │
        │  PROVISIONAL    │
        │   BOUNDARY      │
        └──────┬──────────┘
               │                        S22
      ┌┃───────▼──────────┃┐
      ┃│ PERFORM ACTUAL   │┃
      ┃│ BOUNDARY DECISION│┃
      ┃│   PROCESSING     │┃
      └┃──────────────────┃┘
               │                        S23
        ┌──────▼──────────┐
        │ EVALUATE MOTION │
        │  COMPENSATING   │
        │PREDICTION IMAGE │
        └──────┬──────────┘
               │                        S24
        ┌──────▼──────┐
        │ PROVISIONAL │
        │  BOUNDARY   │
        └──────┬──────┘
               │
        ┌──────▼──────┐
        │    END      │
        └─────────────┘
```

| SLICE |
|-------|

use_auto _mc_size

FIG.14A

| MACRO BLOCK |
|-------------|

mb_type

FIG.14B

## use auto mc size:OFF

mb_type

| 0 | 16x16 |
|---|-------|
| 1 | 16x8 |
| 2 | 8x16 |
| 3 | 8x8 |

FIG.15A

## use auto mc size:ON

mb_type

| 0 | 16x16 |
|---|-------|
| 1 | 16xA |
| 2 | Ax16 |
| 3 | 8x8 |

FIG.15B

| SLICE | MACRO BLOCK |
|-------|-------------|

use_auto _mc_size       mb_type

if( (use_auto_mc_size) && ((mb_type = 16x8) || (mb_type = 8x16)) ) {

    auto_mc_size_enable

}

FIG.16A                    FIG.16B

| SLICE |
|---|

**use_auto _mc_size**

if( use_auto_mc_size ) {

    **auto_mc_algorithm**

}

## FIG.17A

| MACRO BLOCK |
|---|

**mb_type**

## FIG.17B

| SLICE |
|---|

**use_auto _mc_size**

| MACRO BLOCK |
|---|

**mb_type**

if( (mb_type = 16x8x16) ) {

    **auto_mc_size_enable**

}

FIG.18A                FIG.18B

## use auto mc size:OFF

mb_type

| 0 | 16x16 |
|---|-------|
| 1 | 16x8 |
| 2 | 8x16 |
| 3 | 8x8 |

FIG.19A

## use auto mc size:ON

mb_type

| 0 | 16x16 |
|---|-------|
| 1 | (16xA) or (Ax16) |
| 2 | 8x8 |

FIG.19B

| SLICE |
|---|

**use_auto _mc_size**

## FIG.20A

| MACRO BLOCK |
|---|

**motion_vector_num_minus1**

## FIG.20B

FIG.21A

FIG.21B

FIG.21C

FIG.21D

BIDIRECTIONAL
PREDICTION

BIDIRECTIONAL
PREDICTION

FIG.21E

FIG.21F

ACTUAL BOUNDARY DECISION

FIG.21G

FIG.22A

FIG.22B

FIG.22C

FIG.22D

FIG.22E

FIG.22F

# FIG.23

```
                    ┌──────────┐
                    │  START   │
                    └────┬─────┘
                         │                    S31
                         ▼
            ┌────────────────────────┐
            │  DECIDE HORIZONTAL     │
            │  BOUNDARY AND DECIDE   │
            │  VERTICAL BOUNDARY     │
            └───────────┬────────────┘
                        │
                        ▼
            ┌────────────────────────┐
            │    2D DIVISION         │
            │    CANDIDATE           │
            └───────────┬────────────┘
                        │                    S32
                        ▼
            ┌────────────────────────┐
            │  EVALUATE MOTION       │
            │  COMPENSATING          │
            │  PREDICTION IMAGE      │
            └───────────┬────────────┘
                        │                    S33
                        ▼
            ┌────────────────────────┐
            │    2D DIVISION         │
            │    CANDIDATE           │
            └───────────┬────────────┘
                        │
                        ▼
                    ┌──────────┐
                    │   END    │
                    └──────────┘
```

FIG.24A

SMALLER REGION | LARGER REGION

FIG.24B

FIG.25

```
                    ┌─────────┐
                    │  START  │
                    └────┬────┘
                         │                              S41
                         ▼                           ╱
    ┌─────────────────────────────────────────────┐
    │        PERFORM HORIZONTAL OR VERTICAL        │
    │    DIVISION BY USING FIRST AND SECOND        │
    │              MOTION VECTORS                  │
    └─────────────────────┬───────────────────────┘
                          │                            S42
                          ▼                         ╱
    ┌─────────────────────────────────────────────┐
    │       JUDGE SIZE OF DIVIDED REGION BY        │
    │  USING FIRST AND SECOND MOTION VECTORS       │
    └─────────────────────┬───────────────────────┘
                          │                            S43
                          ▼                         ╱
    ┌─────────────────────────────────────────────┐
    │      PERFORMS HORIZONTAL OR VERTICAL         │
    │   DIVISION BY USING MOTION VECTOR            │
    │      OF LARGER REGION AND THIRD              │
    │              MOTION VECTOR                   │
    └─────────────────────┬───────────────────────┘
                          │
                          ▼
                    ┌─────────┐
                    │   END   │
                    └─────────┘
```

**INTERNATIONAL SEARCH REPORT**

| International application No. |
| --- |
| PCT/JP2011/001690 |

**A. CLASSIFICATION OF SUBJECT MATTER**
*H04N7/32(2006.01)i*

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005-012439 A  (Nippon Hoso Kyokai), 13 January 2005 (13.01.2005), entire text; all drawings (Family: none) | 1-15 |
| A | JP 2010-081635 A  (Casio Computer Co., Ltd.), 08 April 2010 (08.04.2010), entire text; all drawings (Family: none) | 1-15 |
| A | JP 2000-511366 A  (Sarnoff Corp.), 29 August 2000 (29.08.2000), entire text; all drawings & US 6084908 A          & WO 1997/017797 A2 | 1-15 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 19 April, 2011 (19.04.11) | 26 April, 2011 (26.04.11) |

| Name and mailing address of the ISA/<br>   Japanese Patent Office | Authorized officer |
| --- | --- |
| Facsimile No. | Telephone No. |

Form PCT/ISA/210 (second sheet) (July 2009)

**EP 2 557 791 A1**

## REFERENCES CITED IN THE DESCRIPTION

**Patent documents cited in the description**

- JP 4025570 B

- WO 2003026315 A